# EUROPÄISCHE PATENTANMELDUNG

(11) **EP 4 481 232 A1**
(43) Veröffentlichungstag der Anmeldung: **25.12.2024**
(21) Anmeldenummer: 24020183.0
(22) Anmeldetag: 06.06.2024
(51) Int. Cl.: F16H 1/32, B62M 6/50, B62M 6/55, B62M 11/02, F16H 55/08, F16H 55/17

(54) **ZYKLOIDGETRIEBE SOWIE ELEKTRISCHE FAHRRAD-ANTRIEBSEINHEIT MIT ZYKLOIDGETRIEBE**

(30) Priorität: 21.06.2023 DE 102023116343; 22.06.2023 DE 102023116519; 05.06.2024 DE 102024115659
(71) Anmelder: SRAM Deutschland GmbH, 97424 Schweinfurt (DE)
(72) Erfinder: Braedt, Henrick, 97456 Dittelbrunn-OT Hambach (DE); Heyna, Sebastian, 97456 Dittelbrunn-OT Hambach/ (DE)

(57) **Zusammenfassung**

Die vorliegende Offenbarung betrifft ein Zykloidgetriebe (CG), eine elektrische Fahrrad-Antriebseinheit (DU) mit Zykloidgetriebe (CG), eine Axialfreilaufeinrichtung (FA) für die Antriebseinheit (DU), sowie eine Drehzahlsensoreinrichtung (TMS) für die Antriebseinheit.

Das Zykloidgetriebe (CG) umfasst eine Antriebswelleneinrichtung (DSD), eine Exzenteranordnung (AE) und eine Abtriebswelleneinrichtung (SO), sowie zumindest eine Zykloidscheibeneinrichtung (DC1, DC2) mit Zykloidverzahnungsanordnungen (CT1, CT2) und zumindest eine Gegenzykloideinrichtung (OC1, OC2) mit Gegenverzahnungsanordnungen (OT1, OT2).

In Kontaktbereichen (CD1, CD2) von Zykloidscheibeneinrichtung (DC1, DC2) und Gegenzykloideinrichtung (OC1, OC2) sind mittels Antriebskontakt zwischen Zykloidscheiben-Konturen (PC1, PC2) der Zykloidverzahnungsanordnungen und Gegenzykloid-Konturen (PO1, PO2) der zumindest einen Gegenzykloideinrichtung (OC1, OC2) zumindest innerhalb eines jeweiligen Lastflanken-Teilbereichs (AL1, AL2) Antriebskräfte (FD1, FD2) in Umfangsrichtung des Zykloidgetriebes (CG) übertragbar.

Zumindest eine der Zykloidverzahnungsanordnungen (CT1, CT2) und/oder zumindest eine der Gegenverzahnungsanordnungen (OT1, OT2) weist entlang eines außerhalb ihres Lastflanken-Teilbereichs (AL1, AL2) der jeweiligen Kontur (PC1, PC2, PO1, PO2) angeordneten Freischnittbereichs (AC1, AC2) eine gegenüber der jeweiligen Kontur (PC1, PC2, PO1, PO2) zurückgenommene Freischnittkontur (PR1, PR2) auf.

Hierdurch werden Verbesserungen des Zykloidgetriebes hinsichtlich Wirkungsgrad, Wärme- und Geräuschentwicklung, Verschleiß und Lebensdauer sowie Fertigungskosten erreicht, unter gleichzeitiger Reduktion von Bauraum und Masse.

## Beschreibung

Die vorliegende Offenbarung betrifft ein Zykloidgetriebe nach dem Oberbegriff von Anspruch 1, eine elektrische Fahrrad-Antriebseinheit nach dem Oberbegriff von Anspruch 9, eine Axialfreilaufeinrichtung nach dem Oberbegriff von Anspruch 20 für die Antriebseinheit, sowie eine Drehzahlsensoreinrichtung nach dem Oberbegriff von Anspruch 21 für die Antriebseinheit.

In der nachfolgenden Beschreibung verwendete und nicht weiter konkretisierte Orts- bzw. Richtungsangaben wie "links", "rechts", "vorne", "hinten", "oben", "unten", "Seitenansicht" usw. entsprechen einer Fahrerperspektive auf einem Fahrrad.

Geländegängige Fahrräder mit elektrischem Unterstützungsantrieb erfreuen sich zunehmender Beliebtheit. Diese auch als E-Mountainbike oder abgekürzt E-MTB bezeichneten Fahrräder werden in Kategorien wie beispielsweise "Cross-Country", "Trail", "Enduro" und "Downhill" eingeteilt bzw. auch sportlich eingesetzt.

Zykloidgetriebe sind allgemein bekannt, dies gilt auch für die Anwendung von Zykloidgetrieben als kompakte, üblicherweise einstufige Untersetzungsgetriebe für elektrische Unterstützungsantriebe am Fahrrad.

Das Funktionsprinzip bekannter Zykloidgetriebe leitet sich jedoch aus der verbreiteten Anwendung im Bereich der Robotik ab. Bei dieser Anwendung von Zykloidgetrieben steht vor allem das mit Zykloidgetrieben erreichbare sehr hohe Übersetzungsverhältnis im Vordergrund, welches bei Robotern die Verwendung kleiner und damit platz- und gewichtssparender, hochdrehender Elektromotoren erlaubt, sowie insbesondere die Anforderung einer vollkommen spielfreien Übersetzung in beide Drehrichtungen des Zykloidgetriebes erfüllt. Damit können die bei Industrierobotern besonders hohen Anforderungen an die exakte Positionier- und Wiederholgenauigkeit der Bewegung von Roboterarmen erfüllt werden. Eine hohe Leistungsübertragung mit hohem Wirkungsgrad steht bei Anwendungen in der Robotik jedoch keineswegs im Vordergrund, weshalb bekannte Zykloidgetriebe nicht hinsichtlich dieser Anforderungen optimiert sind.

Mit diesem Hintergrund ist es die Aufgabe der vorliegenden Offenbarung, ein Zykloidgetriebe sowie eine elektrische Fahrrad-Antriebseinheit mit einem Zykloidgetriebe bereitzustellen, wobei das Zykloidgetriebe auf die Anforderungen beim Fahrrad-Antrieb hin optimiert ist, insbesondere bezüglich hohem Wirkungsgrad, geringer Masse, geringem Bauraumbedarf, geringer Wärmeentwicklung und hoher Leistungskapazität.

Diese Aufgabe wird durch ein Zykloidgetriebe nach Anspruch 1 bzw. durch eine elektrische Fahrrad-Antriebseinheit nach Anspruch 9 gelöst. Bevorzugte Ausführungsformen sind Gegenstand der Unteransprüche.

Das Zykloidgetriebe gemäß der vorliegenden Offenbarung eignet sich für eine elektrische Fahrrad-Antriebseinheit und umfasst eine Antriebswelleneinrichtung mit einer Exzenteranordnung sowie eine Abtriebswelleneinrichtung, wobei Antriebswelleneinrichtung und Abtriebswelleneinrichtung zueinander sowie zu einer gedachten Mittelachse des Zykloidgetriebes konzentrisch angeordnet sind.

Weiterhin umfasst das Zykloidgetriebe zumindest eine Zykloidscheibeneinrichtung mit zusammen zumindest zwei zumindest näherungsweise zykloidischen oder zylindrischen Zykloidverzahnungsanordnungen und zumindest eine Gegenzykloideinrichtung mit zusammen zumindest zwei zumindest näherungsweise zykloidischen oder zylindrischen Gegenverzahnungsanordnungen.

"Zumindest näherungsweise zykloidisch" ist dabei so zu verstehen, dass in einem realen Getriebe die mathematisch-idealen, epizykloidischen Außenkonturen einer Zykloidscheibe bzw. hypozykloidischen Innenkonturen beispielsweise der gehäusefesten Verzahnung nur näherungsweise erreichbar sind. Ferner wird der Ausdruck "zumindest näherungsweise zykloidisch" verwendet, da das Zykloidgetriebe gemäß der vorliegenden Offenbarung gezielt von den mathematisch-theoretischen, zykloidischen Konturen abweicht, wie weiter unten beschrieben wird.

Es sei noch darauf hingewiesen, dass die Ausdrücke "zykloidisch" bzw. "zumindest näherungsweise zykloidisch" streng genommen jeweils beispielsweise "zyklo-zylindrisch" lauten müssten, da der Begriff "zykloidisch" eine ebene, also zweidimensionale Kurve beschreibt, während die vorliegende Offenbarung Zykloidverzahnungsanordnungen mit einem Dickenmaß, also dreidimensionale zylindrische Körper mit kreisförmiger oder zykloidischer Querschnittsform betrifft. Der Einfachkeit halber wird jedoch der Begriff "zykloidisch" anstelle von "zyklo-zylindrisch" verwendet.

Im Beispielfall eines häufig anzutreffenden Standard-Zykloidgetriebes sind üblicherweise ein oder zwei Zykloidscheibeneinrichtungen mit zusammen zwei oder vier Zykloidverzahnungsanordnungen vorzufinden. Bei den sogenannten Cyclo-Acbar-Getrieben (vgl. Druckschrift DE 102016109150A1) und Compurgetrieben (vgl. Druckschrift CA291312A) sind grundsätzlich zwei Zykloidscheibeneinrichtungen vorhanden. Das standardmäßige Zykloidgetriebe besitzt zwei Zykloidverzahnungsanordnungen, nämlich ein Außenzykloid am Außenumfang der zumindest einen Zykloidscheibe sowie die durch Konturen von typischerweise zylindrischen Durchbrüchen in der zumindest einen Zykloidscheibe gebildeten Gegenverzahnungsanordnungen. Beim sog. Compur-Getriebe sind ebenfalls zwei Zykloidverzahnungsanordnungen, in Form jeweils zykloidischer Konturen einer Außenzykloidscheibe und einer Innenzykloidscheibe, vorhanden. Das sog. Cyclo-Acbar-Getriebe besitzt ebenfalls zwei Zykloidverzahnungsanordnungen, welche dort durch die Außenkonturen zweier fest miteinander verbundener Zykloidscheiben gebildet sind.

Bezüglich der Anzahl der "zumindest einen Gegenzykloideinrichtung" ist festzustellen, dass das standardmäßige Zykloidgetriebe und das Cyclo-Acbar-Getriebe jeweils zwei Gegenzykloideinrichtungen mit zusammen zwei Gegenverzahnungsanordnungen aufweisen, während beim Compur-Getriebe die beiden Gegenverzahnungsanordnungen typischerweise in Form eines einstückigen Bauteils vorliegen, welches auch unter der Bezeichnung "Pinring" bekannt ist.

Bezüglich der Anzahl der Gegenverzahnungsanordnungen gilt, dass beim standardmäßigen Zykloidgetriebe typischerweise zwei Gegenverzahnungsanordnungen vorhanden sind, nämlich die zumeist gehäusefesten Außenrollen und die zumeist den Abtrieb bildenden Innenrollen. Beim Cyclo-Acbar-Getriebe sind ebenfalls zwei beispielsweise als Rollensätze vorliegende Gegenverzahnungsanordnungen vorhanden, von denen eine Gegenverzahnungsanordnung gehäusefest ist und die andere den Abtrieb bildet. Beim Compurgetriebe bildet eine Zwischenscheibe oder der sog. Pinring üblicherweise einstückig das Gegenzykloid sowohl für die Zykloidscheibe als auch für das Hohlzykloid.

Bei dem Zykloidgetriebe gemäß der vorliegenden Offenbarung sind weiterhin die zumindest eine Zykloidscheibeneinrichtung und die zumindest eine Gegenzykloideinrichtung zu einem drehmomentübertragend gegenseitig formschlüssigen Eingriff eingerichtet, wobei die zumindest eine Zykloidscheibeneinrichtung und/oder ("oder" ist bevorzugt, "und" ist ebenfalls möglich) die zumindest eine Gegenzykloideinrichtung durch rotatorischen Antrieb mittels der Exzenteranordnung in eine gegenüber der Mittelachse exzentrisch-zykloidale Relativ-Abwälzbewegung bringbar sind.

Dabei ist beispielsweise entweder die Zykloidscheibe beweglich und die Gegenzykloideinrichtung gehäusefest, oder (was beispielsweise beim Compurgetriebe der Fall ist) die Situation ist kinematisch umgekehrt. Je nach Ausbildung des Getriebes und dessen Verbindung mit Anschlussbaugruppen können auch sowohl Zykloidscheibe als auch Gegenzykloideinrichtung beweglich sein. Im Fall mehrerer Zykloidscheiben (beim verbreiteten Standard-Zykloidgetriebe insbesondere zur Reduktion der Unwucht) kann die Exzenteranordnung entsprechend mehrere drehfest miteinander verbundene Exzentereinrichtungen umfassen.

Durch diese Relativ-Abwälzbewegung sind in Kontaktbereichen zwischen der zumindest einen Zykloidscheibeneinrichtung und der zumindest einen Gegenzykloideinrichtung mittels Antriebskontakt zwischen Zykloidscheiben-Konturen der Zykloidverzahnungsanordnungen der zumindest einen Zykloidscheibeneinrichtung und Gegenzykloid-Konturen der Gegenverzahnungsanordnungen der zumindest einen Gegenzykloideinrichtung zumindest innerhalb eines jeweiligen Lastflanken-Teilbereichs der jeweiligen Kontur der jeweiligen Verzahnungsanordnung Antriebskräfte in Umfangsrichtung des Zykloidgetriebes übertragbar.

Das Zykloidgetriebe gemäß der vorliegenden Offenbarung zeichnet sich dadurch aus, dass vorzugsweise zumindest eine der Zykloidverzahnungsanordnungen und/oder zumindest eine der Gegenverzahnungsanordnungen entlang eines außerhalb des jeweiligen Lastflanken-Teilbereichs der jeweiligen Kontur der jeweiligen Verzahnungsanordnung angeordneten Freischnittbereichs eine gegenüber der Kontur zurückgenommene Freischnittkontur aufweist.

Die auf diese Weise erreichbaren Vorteile wie insbesondere Verbesserung des Wirkungsgrads, Geräuschreduktion und verringerte Wärmeentwicklung werden in der Figurenbeschreibung ausführlich diskutiert.

Vorzugsweise bildet dabei die Freischnittkontur an Übergängen zu jeweiligen Kontur der jeweiligen Verzahnungsanordnung und/oder an Übergängen zu den Lastflanken-Teilbereichen einen glatten Übergang, was bedeutet, dass dessen erste mathematische Ableitung stetig ist. Auch dies steht im Dienst der Geräuschreduktion und Erhöhung von Belastbarkeit und Lebensdauer des Zykloidgetriebes.

Bevorzugt liegt die Bogenlänge der Freischnittkontur, bezogen auf die Bogenlänge der gesamten Kontur der jeweiligen Verzahnungsanordnung (mit der Bogenlänge im mathematischen Sinn als Länge der Kontur verstanden) zwischen 60 % und 85 %, besonders bevorzugt zwischen 65 % und 80 % der Bogenlänge der gesamten Kontur der jeweiligen Verzahnungsanordnung. Dies führt dazu, dass das Antriebsdrehmoment im Bereich der Originalkurve unverändert übertragen werden kann, wobei im Bereich der Freischnittkontur statische Überbestimmung und unerwünschte radiale Kräfte minimiert werden.

Die Lehre der vorliegenden Offenbarung ist anwendbar auf jede Art von Zykloidgetriebe, darunter insbesondere auf die weiter oben als "Standard-Zykloidgetriebe" bezeichneten Einscheiben- oder Mehrscheiben- Zykloidgetriebe mit einer oder mehreren Zykloidscheibeneinrichtungen sowie mit zwei Gegenzykloideinrichtungen. Dabei greifen die Zykloidverzahnungsanordnungen der Zykloidscheibeneinrichtungen jeweils parallel und gemeinsam, jedoch phasenverschoben um vorzugsweise 180° in die Gegenverzahnungsanordnungen der Gegenzykloideinrichtungen ein.

Die Lehre der vorliegenden Offenbarung ist weiterhin auch anwendbar auf sog. Compur-Getriebe. Compur-Getriebe weisen zumindest eine Innenzykloidscheibeneinrichtung, zumindest eine Außenzykloidscheibeneinrichtung und eine als Gegenzykloideinrichtung zwischen den Konturen von Innenzykloidscheibeneinrichtung und Außenzykloidscheibeneinrichtung formschlüssig mit den Konturen exzentrisch umlaufenden Nockenscheibe auf. Die Nockenscheibe wird bei manchen Ausführungsformen von Compur-Getrieben auch als "Pinring" bezeichnet. Dabei ist zumindest eine von Innenzykloidscheibeneinrichtung und Außenzykloidscheibeneinrichtung um die Mittelachse des Zykloidgetriebes rotierbar.

Ebenso anwendbar ist die Lehre der vorliegenden Offenbarung auf sog. Cyclo-Acbar-Getriebe. Cyclo-Acbar-Getriebe weisen zumindest zwei rotatorisch starr miteinander verbundenen Zykloidscheibeneinrichtungen und zwei Gegenzykloideinrichtungen auf, wobei zumindest eine der Gegenzykloideinrichtungen um die Mittelachse des Zykloidgetriebes rotierbar ist.

Compur-Getriebe und Cyclo-Acbar-Getriebe besitzen den besonderen Vorteil, dass der jeweilige Getriebe-Abtrieb konzentrisch zum Getriebe-Antrieb rotiert, ohne dass hierzu, wie beim Standard-Zykloidgetriebe, Stift- oder Rollenanordnungen erforderlich sind, die die Zykloidscheiben in entsprechenden zylindrischen Durchbrüchen durchdringen.

Generell ist bevorzugt, dass eine der Gegenzykloideinrichtungen einen mit einer ersten Zykloidscheibeneinrichtung im Eingriff stehenden rotatorischen Abtrieb oder Antrieb des Zykloidgetriebes darstellt, wobei die zweite Gegenzykloideinrichtung eine mit der zweiten Zykloidscheibeneinrichtung in Eingriff stehende, vorzugsweise fest mit einem Gehäuse des Zykloidgetriebes verbundene Drehmoment-Gegenstütze für die Drehmomentübertragung in dem Zykloidgetriebe bildet. Dies bedeutet mit anderen Worten, dass eine der Gegenzykloideinrichtungen gehäusefest angeordnet ist.

Besonders bevorzugt umfassen Kontaktbereiche zumindest einer der Gegenverzahnungsanordnungen, zur Erhöhung der Elastizität bei der Drehmomentübertragung zwischen Zykloidscheibeneinrichtung und Gegenzykloideinrichtung, Polymerwerkstoff. Dies lässt sich beispielsweise in Form von Rollen aus Polymerwerkstoff, oder durch metallische Rollen, die mit Polymerwerkstoff beschichtet sind, an einer oder beiden Gegenzykloideinrichtungen verwirklichen. Auf diese Weise lassen sich insbesondere Kosten, Geräusche und Gewicht des Zykloidgetriebes reduzieren.

Die vorliegende Offenbarung betrifft weiterhin eine elektrische Antriebseinheit für ein Fahrrad zur Anordnung in einem Tretlagerbereich eines Fahrradrahmens, gemäß Anspruch 13. Die Antriebseinheit umfasst eine Tretlagerwelle zur Montage von Pedalkurbeln, eine elektrische Motoreinrichtung mit einer Statoreinrichtung und einer auf einer Rotorwelle angeordneten Rotoreinrichtung, wobei die Rotorwelle koaxial zur Tretlagerwelle angeordnet ist, eine Freilaufanordnung mit zumindest einer Freilaufeinrichtung, eine Sensoranordnung mit zumindest einer Sensoreinrichtung, zumindest eine Elektronikeinrichtung zur Ansteuerung der Motoreinrichtung und/oder zur Verarbeitung von Signalen der Sensoreinrichtung, eine Abtriebswelle zur Übertragung von Antriebsleistung an einen Fahrrad-Antriebsstrang, und eine Getriebeeinrichtung mit einem Zykloidgetriebe.

Die Fahrrad-Antriebseinheit zeichnet sich dadurch aus, dass das Zykloidgetriebe gegenüber der Motoreinrichtung vorzugsweise hermetisch, zumindest flüssigkeitsdicht, gekapselt ist.

Besonders bevorzugt ist das Zykloidgetriebe dabei gegenüber mehreren oder allen von Motoreinrichtung, Freilaufanordnung, Sensoranordnung und Elektronikeinrichtung zumindest flüssigkeitsdicht gekapselt.

Dies verbessert die Schmierung und Wartungsfähigkeit des Zykloidgetriebes sowie der gesamten Antriebseinheit, und erhöht die Lebensdauer der Antriebseinheit auch dadurch, dass die sonstigen Baugruppen der Antriebseinheit gegenüber im Zykloidgetriebe vorhandenen Schmiermitteln geschützt sind.

Hierbei ist vorzugsweise die Rotorwelle der Motoreinrichtung ausschließlich in dem Zykloidgetriebe gelagert, und die Rotoreinrichtung ist im Bereich eines fliegenden Endes der Rotorwelle auf der Rotorwelle angeordnet. Diese Anordnung erleichtert die hermetische bzw. zumindest flüssigkeitsdichte Kapselung des Zykloidgetriebes gegenüber den sonstigen Baugruppen der Antriebseinheit, und verbessert überdies die Konzentrizität und die Toleranzsituation zwischen Motoreinrichtung und Getriebeeinrichtung.

Vorzugsweise ist dabei das getriebeseitige Ende der Rotorwelle im Inneren einer Getriebeabtriebswelle gelagert. Auch dies steht im Dienst der verbesserten Konzentrizität, erleichterten Montage, verbessert Toleranzsituation und des einfachen Aufbaus der Antriebseinheit. Zudem wird auf diese Weise eine Rotorlagerung mit großer Abstützbreite erhalten.

Die vorliegende Offenbarung betrifft weiterhin gemäß Anspruch 13 eine Antriebseinheit wie vorstehend beschrieben, mit einer Axialfreilaufeinrichtung, sowie gemäß Anspruch 20 eine Axialfreilaufeinrichtung für eine derartige Antriebseinheit.

Die Axialfreilaufeinrichtung weist Koppelelemente zur Entkopplung der Abtriebswelle der Antriebseinheit von der Getriebeeinrichtung der Antriebseinheit auf, und ist im Wesentlichen scheibenförmig ausgebildet. Die Axialfreilaufeinrichtung ist zur Durchleitung eines Getriebedrehmoments durch die Koppelelemente in Axialrichtung eingerichtet, bezogen auf die Tretlagerwelle der Antriebseinheit. Die im Wesentlichen scheibenförmig ausgebildete Axialfreilaufeinrichtung hat insbesondere den Vorteil, besonders platzsparend zu sein und gleichzeitig eine hohe spezifische Drehmomentkapazität zu besitzen.

Hierbei ist vorzugsweise vorgesehen, dass zumindest eines der Koppelelemente, besonders bevorzugt mehrere oder alle Koppelelemente der Axialfreilaufeinrichtung im wesentlichen aus einem Polymerwerkstoff bestehen. Hierdurch lassen sich insbesondere Kosten und Gewicht einsparen und es wird eine besonders geräuscharme Axialfreilaufeinrichtung erhalten.

Bevorzugt weist die Axialfreilaufeinrichtung eine Steuereinrichtung zur drehrichtungsabhängig aktiven Ansteuerung bzw. Bewegung zumindest eines der Koppelelemente auf. Hierdurch lassen sich Geräuschentwicklung, Verschleiß und unerwünschte Schleppmomente der Axialfreilaufeinrichtung weiter verringern.

Die vorliegende Offenbarung betrifft weiterhin gemäß Anspruch 16 eine Antriebseinheit wie vorstehend beschrieben, mit einer Drehzahlsensoreinrichtung, sowie eine Drehzahlsensoreinrichtung nach Anspruch 21 für eine derartige Antriebseinheit.

Die Drehzahlsensoreinrichtung umfasst ein Drehzahlsensorelement und ein mit der Tretlagerwelle der Antriebseinheit verbindbares Tachoelement zur berührungslosen Messung der Drehzahl der Tretlagerwelle. Dabei sind Tachoelement und Drehzahlsensorelement auf gegenüberliegenden Seiten einer von einem Getriebedrehmoment der Antriebseinheit durchströmbaren Wandung eines Abtriebswellenabschnitts der Antriebseinheit angeordnet. Auf diese Weise lässt sich die Drehzahlsensoreinrichtung äußerst platzsparend in eine Antriebseinheit integrieren, und die Integration mehrerer Sensoreinrichtungen einer Elektronikeinrichtung wird erleichtert.

Bevorzugt ist dabei das Tachoelement in einem Innenbereich einer Axialfreilaufeinrichtung der Antriebseinheit angeordnet, was zu weiterer Platzersparnis führt.

Vorzugsweise umfasst die Elektronikeinrichtung der Antriebseinheit zumindest zwei der drei, besonders bevorzugt alle drei, Sensoreinrichtungen 1. Drehzahlsensoreinrichtung mit einem Drehzahlsensorelement zur Messung der Drehzahl der Tretlagerwelle, 2. Drehmomentsensoreinrichtung mit einem Drehmomentsensorelement zur Messung einer elastischen Deformation eines Deformationselements eines Abtriebswellenabschnitts, und 3. Geschwindigkeitssensoreinrichtung mit einem Geschwindigkeitssensorelement zur Messung einer Drehzahl eines Fahrrad-Laufrads.

Bevorzugt umfasst die Elektronikeinrichtung eine kreisringförmige oder kreisringsegmentförmige Platineneinrichtung, auf der im Wesentlichen sämtliche Elektronik-Baugruppen und Elektronik-Bauteile der zumindest zwei Sensoreinrichtungen angeordnet sind.

Diese Integration mehrerer oder aller Sensoreinrichtungen in eine einzige Elektronikeinrichtung wird insbesondere durch die vorstehend genannte Drehzahlsensoreinrichtung ermöglicht, und führt zu erheblichen Vereinfachungen und Kostenersparnissen ebenso wie zu einer erhöhten Zuverlässigkeit der Antriebseinheit.

Nachstehend werden bevorzugte Ausführungsformen der Gegenstände der vorliegenden Offenbarung anhand der zugehörigen Figuren beispielhaft beschrieben.

Es zeigt:
- Fig. 1:: einen schematischen Umriss eines E-Mountainbikes mit einer elektrischen Fahrrad-Antriebseinheit mit Zykloidgetriebe in einer schematischen, antriebsseitigen Seitenansicht;
- Fig. 2:: eine Zykloidscheibe einer Zykloidscheibeneinrichtung des Zykloidgetriebes gemäß Fig. 1 mit zwei teilweise dargestellten Gegenzykloideinrichtungen in Form von Rollensätzen;
- Fig. 2A:: eine schematische Ausschnittsvergrößerung der Zykloidscheibe gemäß Fig. 2;
- Fig. 3:: eine weitere schematische Ausschnittsvergrößerung der Zykloidscheibe gemäß Fig. 2;
- Fig. 3A:: eine Angabe zum Ausschnitt der Ausschnittsvergrößerung gemäß Fig. 2;
- Fig. 4:: eine weitere schematische Ausschnittsvergrößerung der Zykloidscheibe gemäß Fig. 2;
- Fig. 4A:: eine Angabe zum Ausschnitt der Ausschnittsvergrößerung gemäß Fig. 4;
- Fig. 5:: eine erste Ausführungsform einer Fahrrad-Antriebseinheit mit Zykloidgetriebe gemäß Fig. 1 bis 4 in einer Längsschnittdarstellung;
- Fig. 6:: die Fahrrad-Antriebseinheit mit Zykloidgetriebe gemäß Fig. 1 bis 5 in einer teilweise geschnittenen Schrägansicht ohne Gehäuserohr;
- Fig. 6A:: die Fahrrad-Antriebseinheit mit Zykloidgetriebe gemäß Fig. 6 einschließlich Gehäuserohr;
- Fig. 7:: Elektronikeinrichtung und Sensoranordnung der FahrradAntriebseinheit gemäß Fig. 1 bis 6A mit drei Sensoreinrichtungen;
- Fig. 8:: zwei Elektronikeinrichtungen und eine Sensoreinrichtung der Fahrrad-Antriebseinheit gemäß Fig. 1 bis 7;
- Fig. 9:: eine Axialfreilaufeinrichtung der Fahrrad-Antriebseinheit gemäß Fig. 1 bis 8 in perspektivischer Schrägansicht;
- Fig. 9A:: Ratschentreiber und Klauenring der Axialfreilaufeinrichtung gemäß Fig. 9;
- Fig. 10:: die Fahrrad-Antriebseinheit mit Zykloidgetriebe gemäß Fig. 1 bis 8 mit der Axialfreilaufeinrichtung gemäß Fig. 9 und 9A in perspektivischem, teilweisem Längsschnitt;
- Fig. 11:: eine schematische Darstellung einer zweiten Ausführungsform eines Zykloidgetriebes;
- Fig. 12:: eine schematische Darstellung einer dritten Ausführungsform eines Zykloidgetriebes;
- Fig. 13:: eine weitere Ausführungsform einer FahrradAntriebseinheit mit Zykloidgetriebe gemäß Fig. 1 bis 4 in einer Längsschnittdarstellung ähnlich Fig. 5;
- Fig. 14:: die Fahrrad-Antriebseinheit mit Zykloidgetriebe gemäß Fig. 1 bis 4 und 13 in einer teilweise geschnittenen Schrägansicht ohne Gehäuserohr in perspektivischer Darstellung ähnlich Fig. 6;
- Fig. 14A:: die Fahrrad-Antriebseinheit mit Zykloidgetriebe gemäß Fig. 14 einschließlich Gehäuserohr in perspektivischer Darstellung ähnlich Fig. 6A;
- Fig. 15:: Elektronikeinrichtung und Sensoranordnung mit drei Sensoreinrichtungen der Fahrrad-Antriebseinheit mit Zykloidgetriebe gemäß Fig. 13 bis 14A, in perspektivischer Schrägansicht ähnlich Fig. 7;
- Fig. 16:: eine Axialfreilaufeinrichtung der Fahrrad-Antriebseinheit gemäß Fig. 13 bis 15 in perspektivischer Schrägansicht ähnlich Fig. 9;
- Fig. 16A:: Ratschentreiber und Klauenring der Axialfreilaufeinrichtung gemäß Fig. 16 ähnlich Fig. 9A;
- Fig. 17:: die Fahrrad-Antriebseinheit mit Zykloidgetriebe gemäß Fig. 1 bis 4 und 13 bis 15 mit der Axialfreilaufeinrichtung gemäß Fig. 16 und 16A in perspektivischem, teilweisen Längsschnitt ähnlich Fig. 10;
- Fig. 18:: Klauenscheibe, Klauenring und Ratschenscheibe der Axialfreilaufeinrichtung gemäß Fig. 16 bis 17 in perspektivischer Schrägansicht;
- Fig. 19:: Gehäuserohr mit Getriebe-Drehmomentabstützung einer Fahrrad-Antriebseinheit mit Zykloidgetriebe gemäß Fig. 1 bis 4 und 13 bis 18 in perspektivischem Viertelschnitt;
- Fig. 20:: eine Fahrrad-Antriebseinheit mit Zykloidgetriebe z.B. gemäß Fig. 1 bis 4 und 13 bis 19 zusammen mit einer Energiespeichereinrichtung in teilweise geschnittener Perspektivansicht mit einer geöffneten Batterieklappe; und
- Fig. 21:: die Fahrrad-Antriebseinheit gemäß Fig. 20 mit geschlossener Batterieklappe.

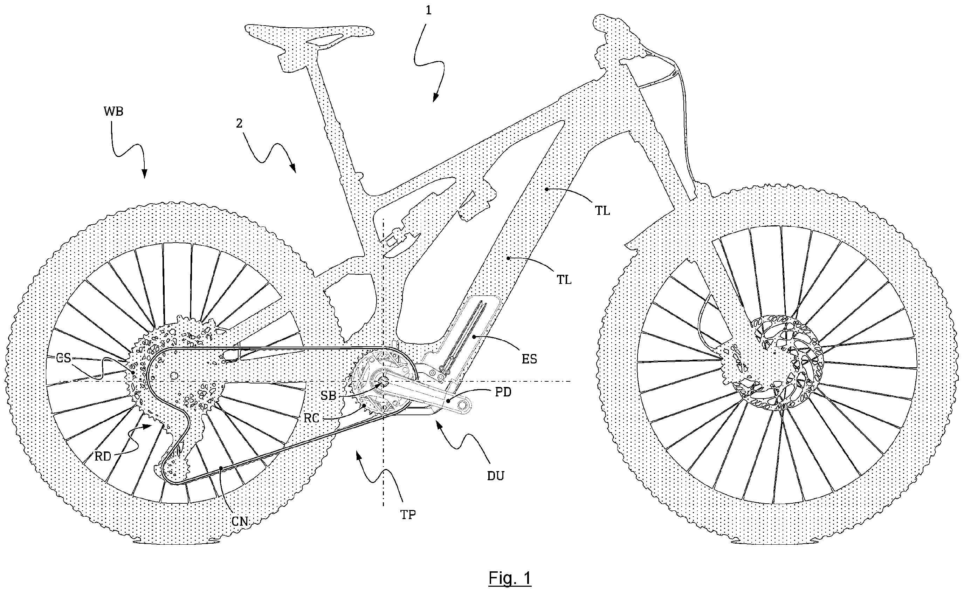

Fig. 1 zeigt einen schematischen Umriss eines Mountainbikes mit einer elektrischen Fahrrad-Antriebseinheit DU mit Zykloidgetriebe CG gemäß der vorliegenden Offenbarung in einer schematisierten, antriebsseitigen Seitenansicht. Das Mountainbike weist einen Haupt-Fahrradrahmen 1 mit einem gefederten Hinterbau 2 auf. Die elektrische Fahrrad-Antriebseinheit DU umfasst eine Energiespeichereinrichtung ES, die beispielsweise in einem Unterrohr TL des Hauptrahmens 1 angeordnet ist. Der Antriebsstrang TP des Mountainbikes umfasst neben der Antriebseinheit DU ein Kettenrad RC, ein hinteres Schaltwerk RD, eine Mehrfach-Ritzelkassette CS sowie eine Antriebskette CN.

Die Antriebseinheit DU ist als Mittelmotor ausgebildet, also im Bereich der Tretlagerwelle SB angeordnet. Vorliegend ist die Tretlagerwelle SB in der Antriebseinheit DU enthalten.

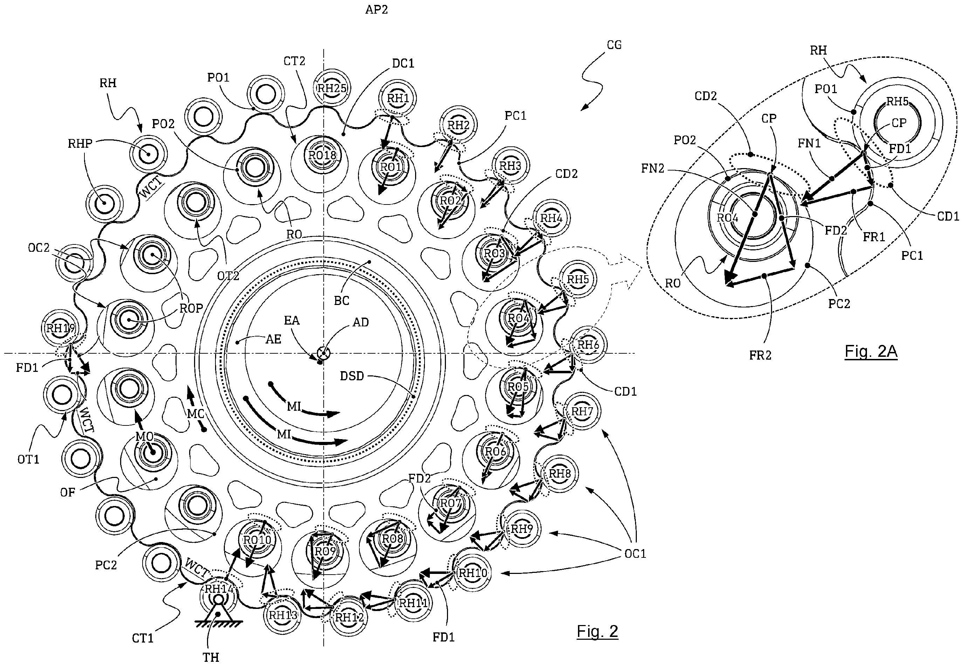

Fig. 2 zeigt eine Zykloidscheibeneinrichtung DC1 des Zykloidgetriebes CG der Antriebseinheit DU gemäß Fig. 1. Weiterhin enthält Fig. 2 zwei teilweise dargestellte Gegenzykloideinrichtungen OC1, OC2 in Form von Rollensätzen mit (an einem Gehäuserohr TH der Antriebseinheit DU fixierten) Gehäuserollen RH und Abtriebsrollen RO, sowie eine Antriebswelleneinrichtung DSD mit einer im Wesentlichen zylindrisch ausgebildeten Exzenteranordnung AE mit einer exzentrischen Mittelachse EA der Zylinderoberfläche der Exzenteranordnung AE.

Die aus Gewichtsgründen vorzugsweise aus Aluminium gefertigte Zykloidscheibeneinrichtung DC1, DC2 ist bei dieser Ausführungsform mittels eines Kugellagers BC auf der Exzenteranordnung AE der Antriebswelleneinrichtung DSD gelagert dergestalt, dass eine Antriebsrotation MI der Antriebswelleneinrichtung DSD um die Antriebswellenachse AD, in Verbindung mit einem Antriebskontakt zwischen einer Zykloidkontur PC1 der Zykloidscheibeneinrichtung DC1, DC2 mit Gegenkonturen PO1 der Gehäuserollen RH in Kontaktbereichen CD 1, zu einer exzentrischzykloidalen Abwälzbewegung MC der Zykloidscheibeneinrichtung DC1, DC2 gegenüber den Rollensätzen RH, RO führt.

Diese exzentrisch-zykloidale Abwälzbewegung MC der Zykloidscheibeneinrichtung DC1, DC2 besitzt eine exzentrisch-kreisförmige Bewegungskomponente, welche der Antriebswellen-Drehzahl sowie der exzentrischkreisförmigen Bewegung der Mittelachse der Exzenteranordnung AE um die Antriebswellenachse AD entspricht, sowie eine entsprechend des Übersetzungsverhältnisses des Zykloidgetriebes CG verlangsamte zentrisch-kreisförmige Bewegungskomponente um die Antriebswellenachse AD.

Da sich das Übersetzungsverhältnis eines Zykloidgetriebes CG als Quotient aus der Zähnezahl der Zykloidscheibeneinrichtung DC1, DC2 (vorliegend 24 Zykloidscheiben-Wellen WCT bzw. -Zähne) und der Differenz der Zähnezahlen der Gegenzykloideinrichtung OC1 (vorliegend 25 GehäuseRollen RH bzw. -Zähne) errechnet, ergibt sich vorliegend ein Übersetzungsverhältnis von RG = 24/(25-24) = 24.

Dies bedeutet also, dass sich die Zykloidscheibeneinrichtung DC1, DC2 einmal um ihre eigene Achse dreht, welche mit der Mittelachse EA der Zylinderoberfläche der Exzenteranordnung AE zusammenfällt, wenn die Antriebswelleneinrichtung DSD und damit die Exzenteranordnung AE 24 Rotationen ausgeführt haben. Diese langsame Rotation der Zykloidscheibeneinrichtung DC1, DC2 um ihre eigene Achse EA wird mittels Antriebskontakt in Kontaktbereichen CD2 auf die Abtriebsrollen RO übertragen, wobei die im Wesentlichen zylindrischen inneren Zykloidkonturen PC2 der Zykloidscheibeneinrichtung DC1, DC2 gleichzeitig auf den Oberflächen der Abtriebsrollen RO zykloidisch-umlaufend abrollen.

Auf diese Weise wird die exzentrisch-zykloidale Abwälzbewegung MC der Zykloidscheibeneinrichtung DC1, DC2 wieder in eine zur Antriebswellenachse AD der Antriebswelleneinrichtung DSD konzentrische Abtriebs-Rotationsbewegung MO umgewandelt, welche sich einem Outputflansch OF des Zykloidgetriebes CG mitteilt.

In Fig. 2 und in der entsprechenden Ausschnittsvergrößerung gemäß Fig. 2A sind die Kontaktbereiche CD1 und CD2, in welchen der Antriebskontakt zwischen den Zykloidscheiben-Konturen PC1, PC2 und den Gegenzykloid-Konturen der Gegenverzahnungsanordnungen OT1, OT2 der Gegenzykloideinrichtungen OC1, OC2, also der Gehäuserollen RH und der Abtriebsrollen RO stattfindet, jeweils mittels punktierter Ellipsen hervorgehoben.

In diesen Kontaktbereichen CD1 und CD2 werden jeweils Normalkräfte FN1, FN2 zwischen den Gehäuserollen RH bzw. den Abtriebsrollen RO und den jeweiligen Zykloidkonturen PC1, PC2 übertragen, wobei die jeweilige Richtung der jeweiligen Normalkraft FN1, FN2 naturgemäß senkrecht auf der jeweiligen Momentankontaktfläche am Kontaktpunkt CP zwischen der jeweiligen Rollenkontur PO1, PO2 und der jeweiligen Zykloidkontur PC1, PC2 steht.

Zur Übertragung der eigentlichen Antriebskräfte und damit Drehmomente und Leistungen im Zykloidgetriebe CG tragen jedoch jeweils nur die in Umfangsrichtung verlaufenden Kraftkomponenten der Normalkräfte FN1, FN2, somit die Antriebskräfte FD1, FD2 gemäß Fig. 2 und Fig. 2A bei.

Hingegen übertragen die in Radialrichtung des Zykloidgetriebes CG verlaufenden Kraftkomponenten der Normalkräfte FN 1, also die Radialkräfte FR1, FR2 gemäß Fig. 2 und Fig. 2A kein wirksames Drehmoment und damit auch keine Antriebsleistung. Vielmehr führen die Radialkräfte FR1, FR2 lediglich zu Verspannungen im Zykloidgetriebe CG.

Im Unterschied zu der lediglich schematischen Darstellung in Fig. 2 und Fig. 2A greifen die in Radialrichtung des Zykloidgetriebes CG verlaufenden Radialkräfte FR1, FR2 im Sinne einer vektoriellen Kraftzerlegung tatsächlich ebenfalls am jeweiligen Kontaktpunkt CP an. Die jeweiligen Pfeile der Radialkräfte FR1, FR2 sind in Fig. 2 und Fig. 2A lediglich darstellungshalber entlang der Richtung der Umfangskräfte FD1, FD2 parallel verschoben, um die Zeichnungen nicht durch Hinzufügung kompletter Kräfteparallelogramme zu überladen. An der Korrektheit der dargestellten vektoriellen Kraftzerlegung ändert dies jedoch nichts.

In Fig. 2 wird somit erkennbar, dass wirksame Antriebskräfte und Antriebsdrehmomente hauptsächlich an denjenigen Stellen zwischen der Zykloidscheibeneinrichtung DC1, DC2 und den Rollensätzen RH, RO übertragen werden, an denen die momentanen Normalkräfte FN1, FN2 eine nennenswerte Kraftkomponente FD1, FD2 in Umfangsrichtung besitzen.

Dies ist in dem der Darstellung von Fig. 2 entsprechenden Moment und bei der dort bestehenden Relativposition von Zykloidscheibeneinrichtung DC1, DC2 und Rollensätzen RH, RO primär und näherungsweise hauptsächlich bei den Gehäuserollen RH4-RH 12 und bei den Abtriebsrollen RO3-RO8 der Fall. Bei allen anderen Gehäuserollen RH und Abtriebsrollen RO überwiegt jeweils die radiale Kraftkomponente FR1 bzw. FR2, welche keine Antriebsleistung überträgt, sondern lediglich zu Verspannungen im Getriebe führt.

Eine analoge Situation liegt auch bei den restlichen Gehäuserollen RH und Abtriebsrollen RO vor, die (mit Ausnahme der Gehäuserolle RH 19) in Fig. 2 nicht eigens bezeichnet und in Fig. 2 nicht eigens mit weiteren Kraftvektoren versehen sind. Jedoch übertragen sämtliche dieser restlichen Gehäuserollen RH und Abtriebsrollen RO keine Antriebsleistung, da dort etwaige Kraftkomponenten FD1, FD2 in Umfangsrichtung des Zykloidgetriebes CG den antreibenden Kraftkomponenten FD 1, FD2 der Gehäuserollen RH1-RH14 bzw. der Abtriebsrollen RO1-R10 lediglich entgegen wirken, wie in Fig. 2 am Beispiel der Abtriebsrolle RH 19 dargestellt.

Dies führt bei Zykloidgetrieben nach dem Stand der Technik dazu, dass ein erheblicher Teil der Kräfte zwischen den Zykloidverzahnungsanordnungen CT1, CT2 der Zykloidscheibeneinrichtungen DC1, DC2 und den Gegenverzahnungsanordnungen OT1, OT2 der Gegenzykloideinrichtungen OC1, OC2 keinen Beitrag zur Übertragung von Antriebsleistung durch das Getriebe leistet, sondern lediglich zu elastischen Verspannungen im Getriebe führt. Dem Fachmann ist klar, dass derartige Verspannungen lediglich zu unerwünschter Reibung und Abnutzung im Getriebe führen.

Diese elastischen Verspannungen in Zykloidgetrieben ohne Beitrag zur Übertragung der Antriebsleistung sind umso größer, je größer bzw. ungenauer die Fertigungstoleranzen der an der Kraftübertragung beteiligten Bauteile bzw. Baugruppen sind. Im Umkehrschluss bedeutet dies, dass herkömmliche Zykloidgetriebe mit besonders geringen Fertigungstoleranzen gefertigt werden müssen, um derartige Verspannungen und die damit verbundenen Nachteile zu minimieren. Dies mag bei Einsätzen von Zykloidgetrieben in der Robotik leistbar sein, da es sich bei Industrierobotern um kostenintensive Investitionsgüter handelt, und da beim Einsatz von Zykloidgetrieben in Industrierobotern weniger die Aspekte wie Wirkungsgrad, Wärmeentwicklung oder Verlustleistung im Vordergrund stehen, sondern es dort hauptsächlich auf die exakte und reproduzierbare Positionierung des jeweiligen Rotorarms auch bei Drehrichtungsumkehr des Antriebs ankommt.

Das Zykloidgetriebe CG gemäß der vorliegenden Offenbarung ist jedoch zum Einsatz in einem elektrischen Hilfsantrieb eines Fahrrades vorgesehen, bei dem umgekehrt Aspekte wie Positionierungsgenauigkeit, Wiederholgenauigkeit und Drehmomentübertragung in beide Richtungen praktisch keine Rolle spielen. Vielmehr steht bei diesem Einsatz die Maximierung von Wirkungsgrad und Lebensdauer bei gleichzeitiger Minimierung von Masse, Geräusch und Gewicht des Zykloidgetriebes CG im Vordergrund.

Mit diesem Hintergrund und mit der Erkenntnis, dass jeweils lediglich einige der Gehäuserollen RH bzw. Abtriebsrollen RO und lediglich entsprechende Teilbereiche der Zykloidscheiben-Konturen an der Übertragung von Antriebsleistung durch das Zykloidgetriebe CG beteiligt sind, weisen bei dem Zykloidgetriebe CG gemäß Fig. 1 bis 10 die Zykloidverzahnungsanordnungen CT1 und CT2 entlang eines Freischnittbereichs AC1, AC2, welcher sich außerhalb des hauptsächlich an der Leistungsübertragung beteiligten Lastflanken-Teilbereichs AL1, AL2 der jeweiligen Kontur PC1 und PC2 der jeweiligen Verzahnungsanordnung CT1 und CT2 befindet, eine gegenüber der Kontur PC1, PC2 zurückgenommene Freischnittkontur PR1, PR2 auf.

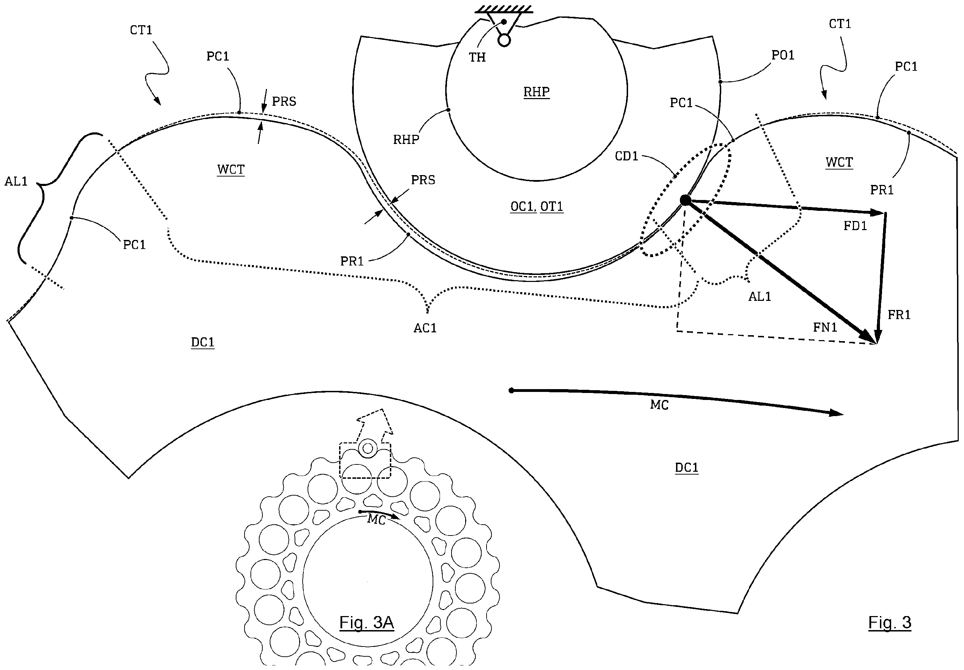

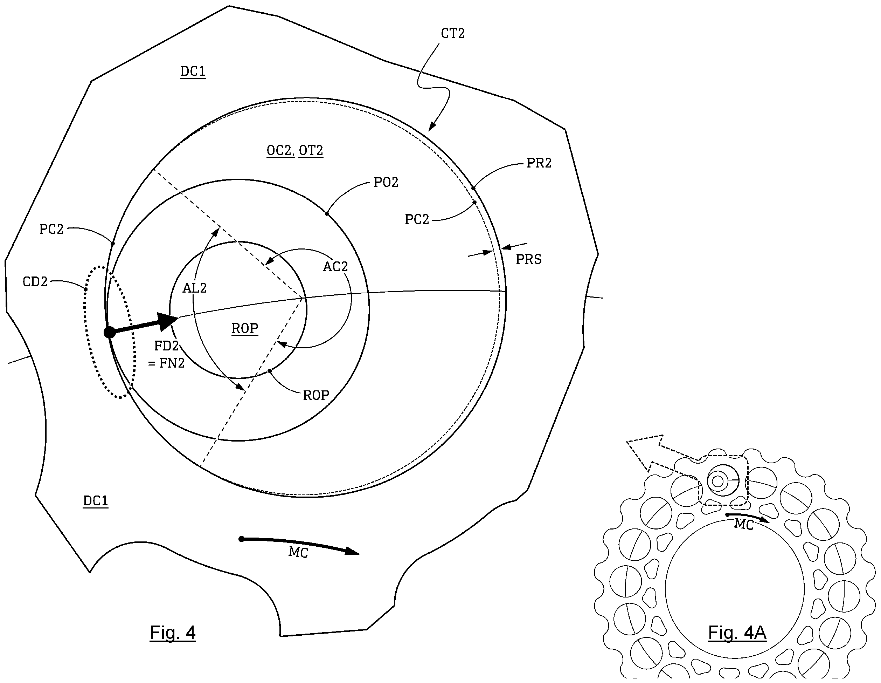

Dies ist in Fig. 3 bzw. Fig. 4 ersichtlich. Fig. 3 zeigt die Freischnittkontur PR1 im Bereich der Zykloidverzahnungsanordnung CT1, also am Außenumfang der Zykloidscheibeneinrichtung DC1 gemäß Fig. 2, während Fig. 4 die Freischnittkontur PR2 im Bereich der Zykloidverzahnungsanordnung CT2, also an den im Wesentlichen zylindrischen inneren Zykloidkonturen PC2 verdeutlicht.

Man erkennt, dass die Zykloidkonturen PC1, PC2 in denjenigen Teilbereichen AL1, AL2 der jeweiligen Kontur PC1 und PC2, welcher gemäß der vorstehenden Diskussion von Fig. 2 hauptsächlich an der Leistungsübertragung beteiligt ist, unverändert den theoretischen bzw. jeweils idealen Konturen entsprechen. Hingegen sind die Zykloidkonturen PC1, PC2 in denjenigen Teilbereichen AC1, AC2 der jeweiligen Kontur PC1 und PC2, welcher wenig oder nicht an der Leistungsübertragung beteiligt ist, geringfügig, jedoch klar erkennbar zurückgenommen. Wie in Fig. 3 dargestellt, kann insbesondere in den Kopfbereichen der wellenförmigen Verzahnung WCT der Außenkontur der Zykloidscheibeneinrichtung CT1 eine ausgeprägt zurückgenommene Freischnittkontur PR1 vorhanden sein, da insbesondere in diesen Bereichen faktisch keine Antriebsleistung übertragen wird, wie vorstehend anhand von Fig. 2 und Fig. 2A dargelegt.

Im Versuch bewährte und bevorzugte Werte für das Maß der Zurücknahme PRS der Freischnittkontur PR1 liegen zwischen 0,05 mm und 0,2 mm, vorzugsweise in der Größenordnung von 0,1 mm, bei einem beispielhaften Außendurchmesser des Gehäuserohrs TH des Zykloidgetriebes CG von 100 mm.

Auf diese Weise werden die vorstehend diskutierten Verspannungen im Zykloidgetriebe CG vermieden bzw. maßgeblich reduziert. Ebenso werden die Anforderungen an die Fertigungsgenauigkeit des Zykloidgetriebes CG verringert, ohne dass dies unmittelbar nachteilige Folgen hinsichtlich Wirkungsgrad und Lebensdauer des Zykloidgetriebes CG hätte.

Im Ergebnis wird gemäß der vorliegenden Offenbarung ein Zykloidgetriebe CG erhalten, welches kostengünstig darstellbar ist und auf minimalem Bauraum mit minimalem Gewicht einen hohen Wirkungsgrad bei der Leistungsübertragung und gleichzeitig eine hohe Lebensdauer möglich macht.

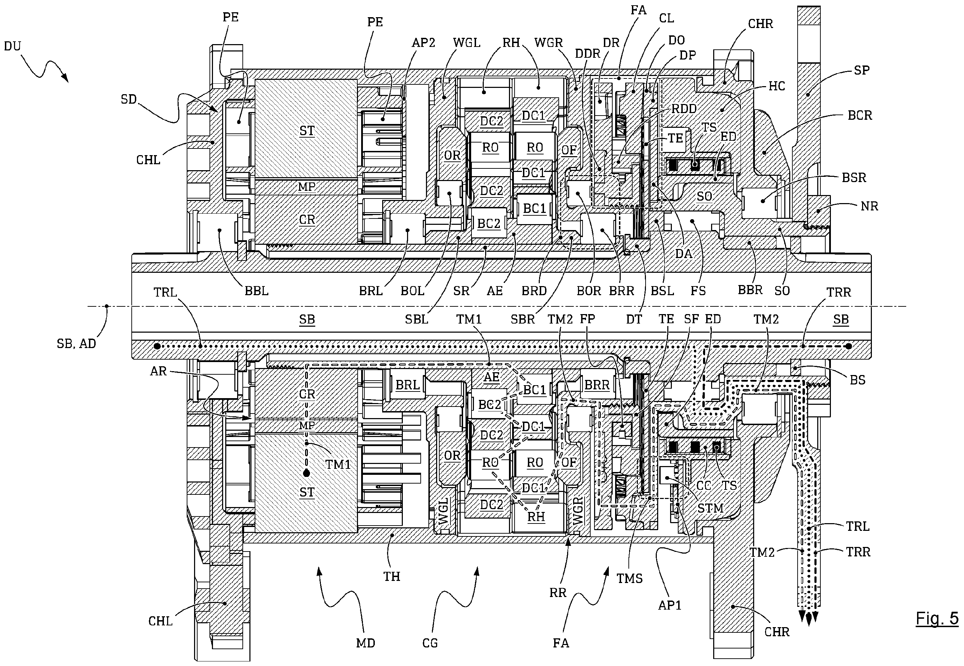

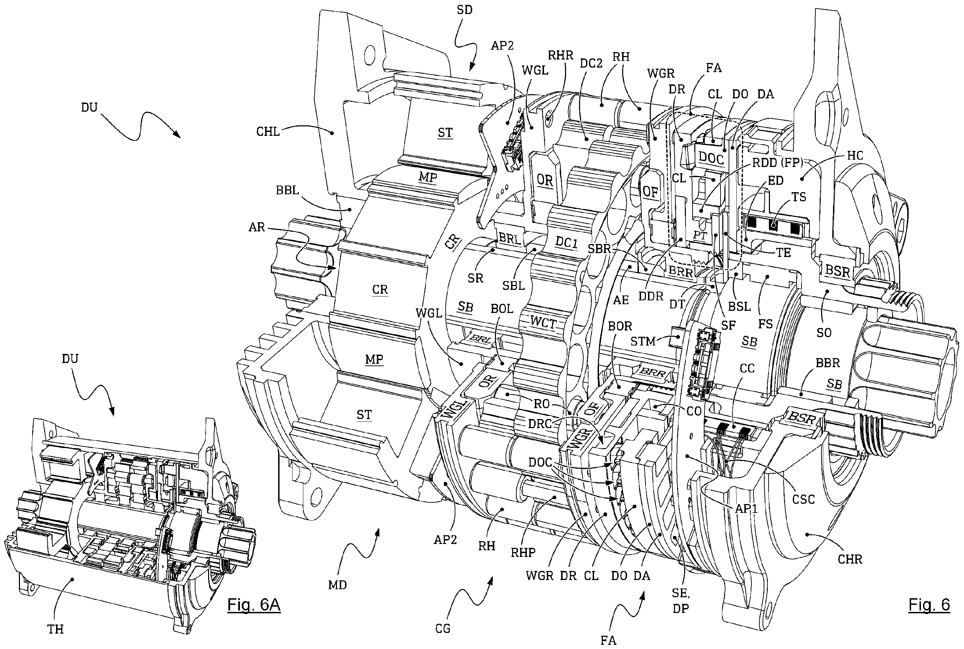

Fig. 5 zeigt eine elektrische Fahrrad-Antriebseinheit DU mit einem Zykloidgetriebe CG gemäß Fig. 2 bis 4 im Längsschnitt, während die Antriebseinheit DU in Fig. 6 (ohne Gehäuserohr TH) in einer teilweise geschnittenen Schrägansicht dargestellt ist.

Fig. 6A zeigt die Antriebseinheit mit Gehäuserohr TH. Eine Zusammenschau von Fig. 5 bis 7 verdeutlicht die wesentlichen Baugruppen und Komponenten der Antriebseinheit DU, darunter eine elektrische Motoreinrichtung MD mit einer Motor-Rotoreinrichtung AR und einer Motor-Statoreinrichtung SD, das Zykloidgetriebe CG mit zwei Zykloidscheibeneinrichtungen DC1 und DC2, ferner eine Axialfreilaufeinrichtung FA, Elektronikeinrichtungen AP1 und AP2 und eine Sensoranordnung mit Sensoreinrichtungen und deren Sensorelementen SSP, STM und TS.

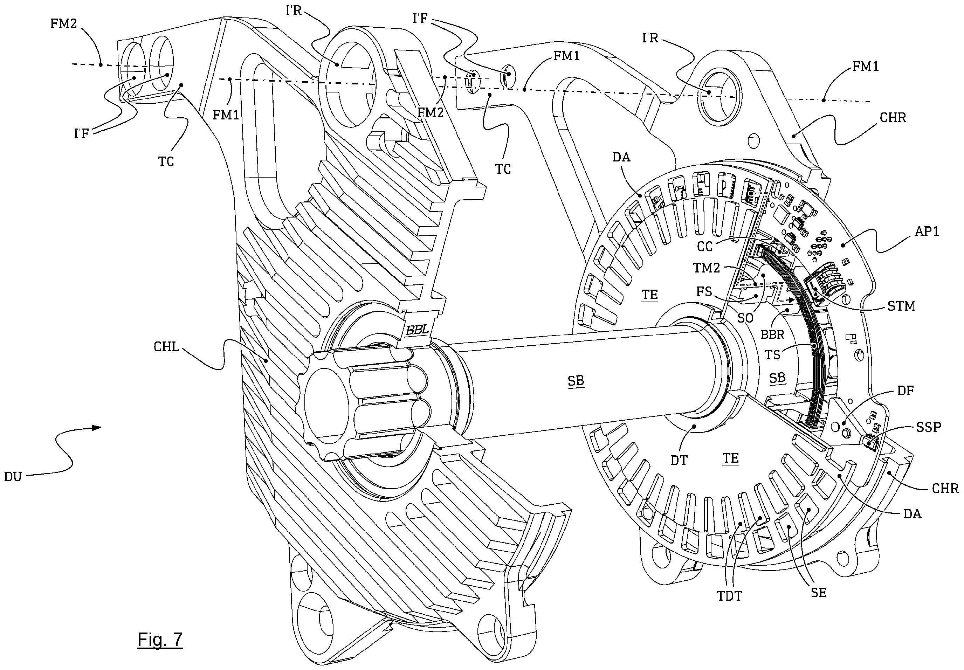

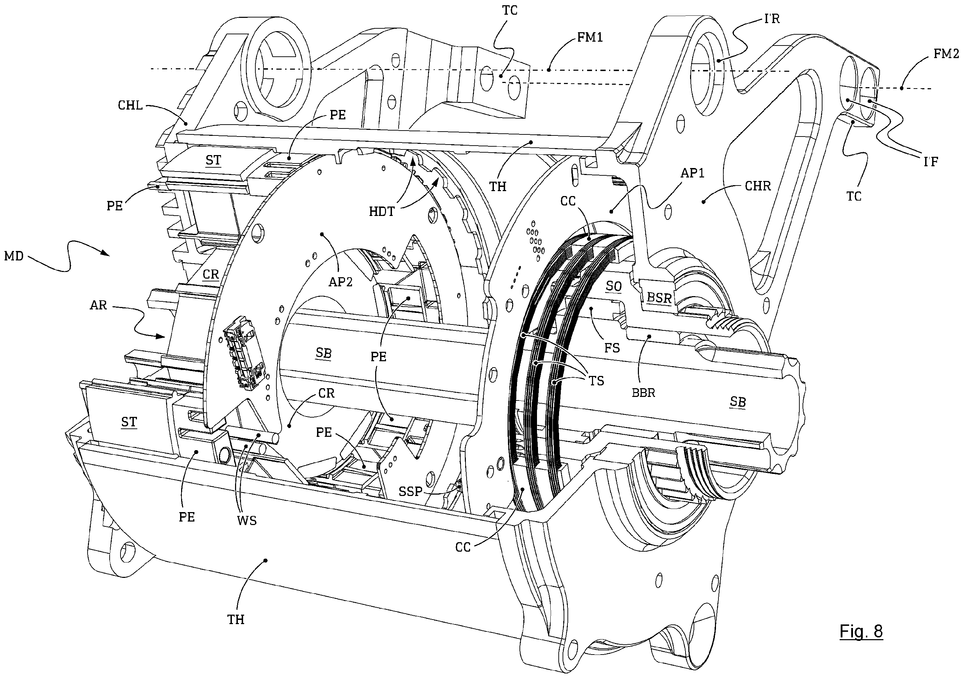

Eine Zusammenschau von Fig. 5 und Fig. 6 verdeutlicht auch die platzsparende Anordnung der Baugruppen und Komponenten der Antriebseinheit DU, die den innerhalb des Gehäuses TH, CHL, CHR zur Verfügung stehenden Bauraum nahezu lückenlos ausfüllen. Hierzu leisten insbesondere die Axialfreilaufeinrichtung FA (vgl. Fig. 6, Fig. 9/9A und Fig. 10), die Elektronikeinrichtung AP1 mit der gesamten Sensorelektronik aller drei Sensoreinrichtungen (vgl. Fig. 7 und 8) sowie die DrehzahlSensoreinrichtung STM, TE (vgl. Fig. 6 und Fig. 7) wesentliche Beiträge.

Fig. 5 und Fig. 6 zeigen auch eine spezielle Formgebung der Zykloidscheibeneinrichtungen DC1 und DC2. Die Zykloidscheibeneinrichtungen sind im Bereich des Kontakts mit den Gehäuserollen RH in axialer Richtung breiter als im Bereich des Kontakts mit den Abtriebsrollen RO. Dies trägt der Tatsache Rechnung, dass im Bereich des Kontakts der Zykloidscheibeneinrichtungen mit den Gehäuserollen RH aufgrund der beidseitig konvexen Kontaktflächen eine tendenzielle höhere Flächenpressung auftritt als im Bereich des Kontakts der Zykloidscheibeneinrichtungen mit den Abtriebsrollen RO, wo eine konkav-konvexe Kontaktsituation vorliegt, wie Fig. 2 bis 4 deutlich zu entnehmen ist. Um die tendenzielle höhere Flächenpressung im Bereich des Kontakts der Zykloidscheibeneinrichtungen mit den Gehäuserollen RH auszugleichen, sind die Zykloidscheibeneinrichtungen an ihrem Außenumfang entsprechend breiter als im radial weiter innen liegenden Bereich des Kontakts mit den Abtriebsrollen RO. Dies ist insbesondere dann vorteilhaft, wenn die Zykloidscheiben aus Leichtmetall, beispielsweise aus Aluminium bestehen, welches eine gegenüber Stahl geringere Härte auch in den Kontaktbereichen CD1, CD2 mit den Gegenzykloideinrichtungen OC1, OC2 aufweist.

Es sei noch erwähnt, dass anstelle der Gehäuserollen RH auch andere Formen einer gehäusefesten Innenverzahnung eingesetzt werden können. Ebenso können anstelle der Abtriebsrollen RO beispielsweise auch Abtriebs-Stifte oder auf Abtriebs-Stiften angeordnete Abtriebs-Kugellager verwendet werden.

Fig. 5 ist weiterhin zu entnehmen, dass die Getriebeeinrichtung CG durch die beiden Getriebewandungen WGL und WGR sowie durch die beiden Rotorlager BRL, BRR und die Output-Lager BOL, BOR vollständig von den sonstigen Baugruppen der Antriebseinheit DU abgeschlossen, insbesondere zumindest flüssigkeitsdicht abgeschlossen ist. Dies ermöglicht eine optimale und dauerhafte Versorgung der Getriebeeinrichtung CG mit dem entsprechenden Getriebe-Schmierstoff, ohne dass der Schmierstoff aus der Getriebeeinrichtung CG austreten und die Funktion der sonstigen Baugruppen, insbesondere der Motoreinrichtung MD, der Sensoreinrichtungen und der Elektronikeinrichtungen AP1 und AP2 beeinträchtigen kann.

Der vollständige Abschluss der Getriebeeinrichtung CG von den sonstigen Baugruppen der Antriebseinheit DU wird insbesondere dadurch ermöglicht, dass die Rotorwelle SR ausschließlich in dem Zykloidgetriebe CG gelagert ist, wobei die Rotoreinrichtung AR im Bereich eines fliegenden Endes der Rotorwelle SR auf der Rotorwelle SR angeordnet ist, sowie dadurch, dass das Drehmoment aus der Getriebeeinrichtung CG mittels eines Outputflanschs OF ausgeleitet wird, welcher mittels einer differentiellen Rotorlagerung BRD zwischen dem Output-Lager BOR und dem rechten Rotorlager BRR gelagert ist.

Eine derartige differentielle Rotorlagerung BRD mit der Anordnung der Rotoreinrichtung AR auf einem fliegenden Ende der Rotorwelle SR lässt sich prinzipiell auch beim Einsatz eines Zykloidgetriebes CG gemäß dem Stand der Technik in einer Fahrrad-Antriebseinheit DU, und auch beim Einsatz anderer Getriebeformen wie beispielsweise von Planetengetrieben realisieren.

Fig. 5 zeigt auch die wesentlichen Kraftflüsse TRL, TRR, TM 1 und TM2 durch die Antriebseinheit DU. TRL und TRR sind die vom Fahrer über die Pedalkurbeln PD (vgl. Fig. 1) in die Antriebseinheit DU eingeleiteten linksseitigen bzw. rechtsseitigen Fahrerdrehmomente TRL, TRR, welche über einen Klemmkörperfreilauf FS vereint und dort in radialer Richtung aus der Tretlagerwelle SB in die Abtriebswelle SO eingeleitet werden. An dieser Stelle ergibt sich sodann die Möglichkeit, die Größe des Fahrerdrehmoments TRL, TRR mittels eines Deformationselements ED berührungslos und insbesondere unbeeinflusst von der Größe des Motor- bzw. Getriebedrehmoments TM2 zu messen, welches (im axialen Bereich des Klemmkörperfreilaufs FS) durch denselben Querschnitt der Abtriebswelle SO wie das Fahrerdrehmoment hindurchgeleitet wird.

Das Deformationselement ED liegt in Form einer Hülse mit Kragen vor und besteht aus einer magnetostriktiv aktiven, beispielsweise Nickel oder Kobalt enthaltenden Legierung. In Abhängigkeit der Größe des durch den Klemmkörperfreilauf FS hindurchgeleiteten Fahrerdrehmoments TRL, TRR erfährt die Abtriebswelle SO im Bereich des Klemmkörperfreilaufs FS durch den Klemmkörperfreilauf FS eine radiale Aufweitung, welche sich dem auf die Abtriebswelle SO beispielsweise aufgepressten Deformationselement ED mitteilt. Aufgrund der radialen Aufweitung des Deformationselements ED ändern sich dessen magnetische bzw. magnetostriktive Eigenschaften. Diese Änderung lässt sich mittels eines Drehmomentsensors TS (vgl. auch Fig. 6 und 7 sowie Fig. 8 und 10) berührungslos detektieren.

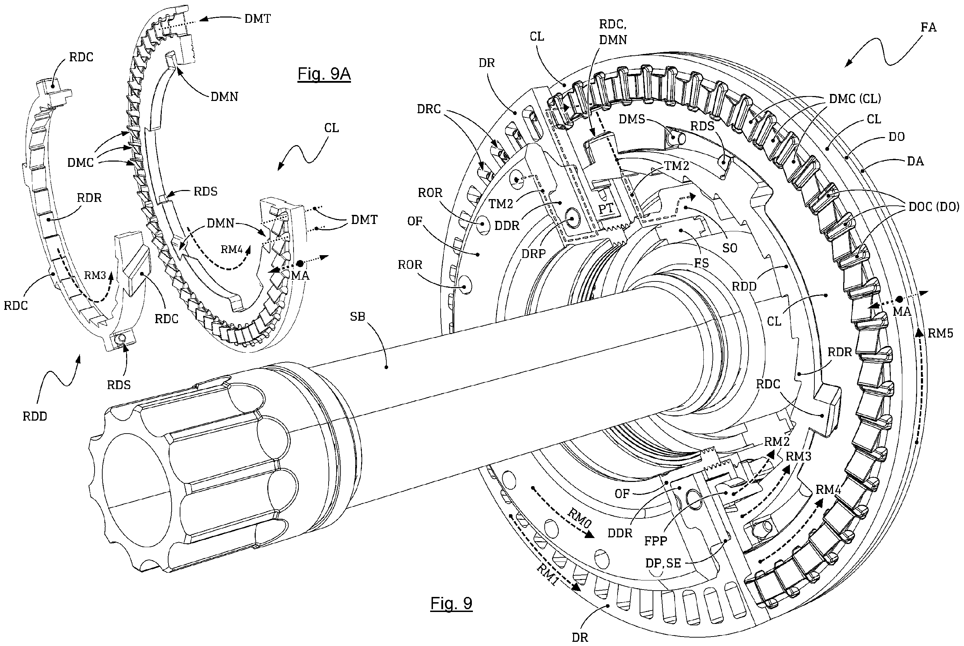

Wie Fig. 9/9A in Zusammenschau mit Fig. 6 entnommen werden kann, zeichnet sich die Axialfreilaufeinrichtung FA insbesondere dadurch aus, dass der von der Getriebeeinrichtung CG kommende Kraftfluss, also das Getriebedrehmoment TM2, mittels der Koppelelemente DR, CL und DO in Axialrichtung, bezogen auf die Tretlagerwelle SB, durch die Axialfreilaufeinrichtung FA geleitet wird. Bei den Koppelelementen DR, CL und DO handelt es sich um eine Ratschenscheibe DR, einen axial entlang der Richtung MA verschiebbar beweglichen Klauenring CL und eine Output-Klauenscheibe DO.

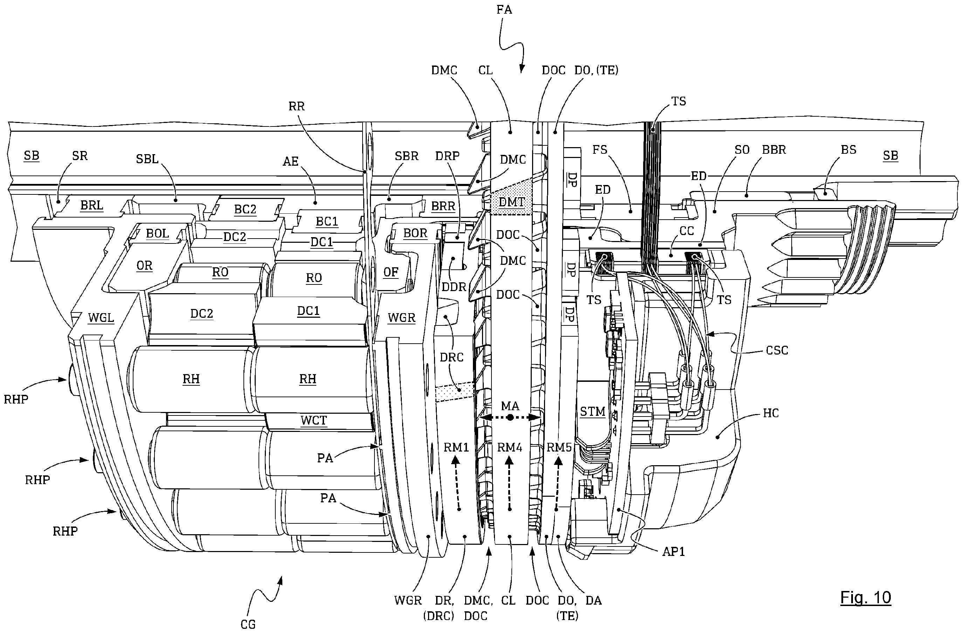

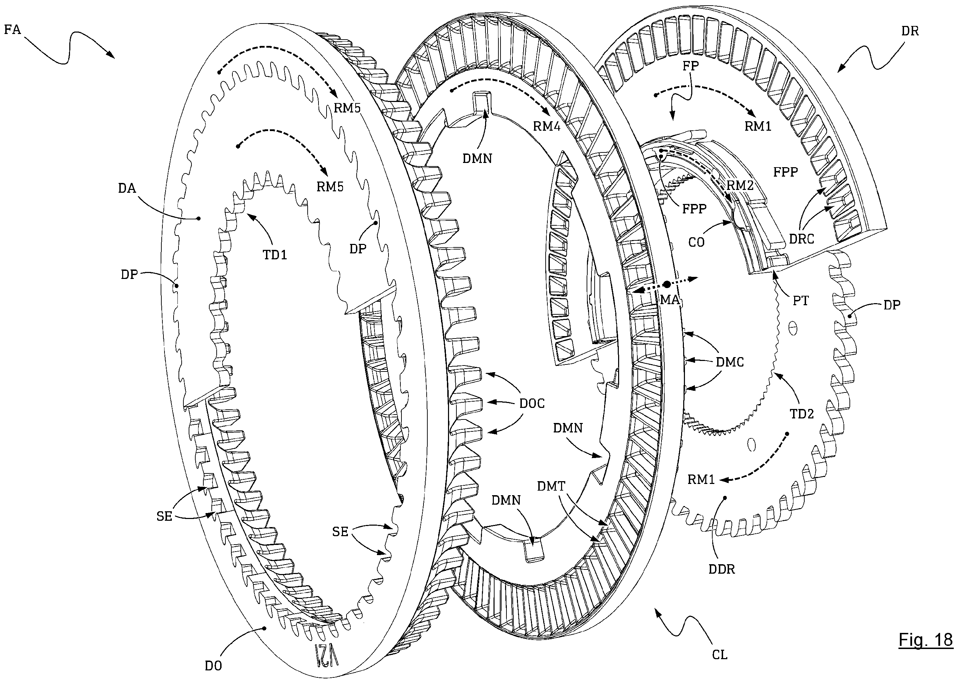

Wie insbesondere Fig. 9/9A und Fig. 10 in Zusammenschau mit Fig. 5 und Fig. 18 zeigen, ist die Axialfreilaufeinrichtung FA im Wesentlichen scheibenförmig flach ausgebildet, wobei das Motor- bzw. Getriebedrehmoment TM2 in einem radial weit außen liegenden Bereich durch die Axialfreilaufeinrichtung FA durchgeleitet wird.

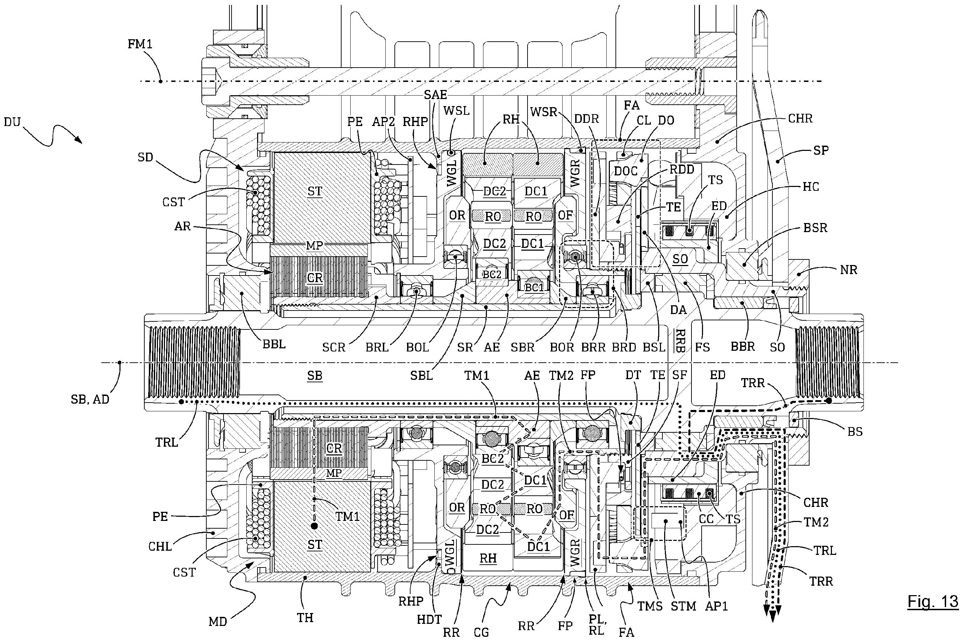

Dies wird auch durch Fig. 18 nochmals verdeutlicht, welche Klauenscheibe DO, Klauenring CL und Ratschenscheibe DR sowie die klinkenseitigen Komponenten eines Primärfreilaufs FP der Axialfreilaufeinrichtung FA zeigt. Die Darstellung gemäß Fig. 18 entstammt zwar der weiter unten beschriebenen, weiteren Ausführungsform gemäß Fig. 13 bis 21. Die in Fig. 18 dargestellten Baugruppen bzw. Komponenten der Axialfreilaufeinrichtung FA stimmen jedoch zumindest hinsichtlich deren Funktionen mit der Axialfreilaufeinrichtung FA der Fahrrad-Antriebseinheit gemäß Fig. 1 bis 11 überein.

Fig. 18 zeigt auch, auf welche Weise bei der weiteren Ausführungsform gemäß Fig. 13 bis 21 die vorzugsweise metallische Abtriebsscheibe DA der Axialfreilaufeinrichtung FA mittels Mitnehmervorsprüngen DP und formkorrespondierenden Eingriffsaufnahmen SE mit der der Output-Klauenscheibe DO verbunden ist.

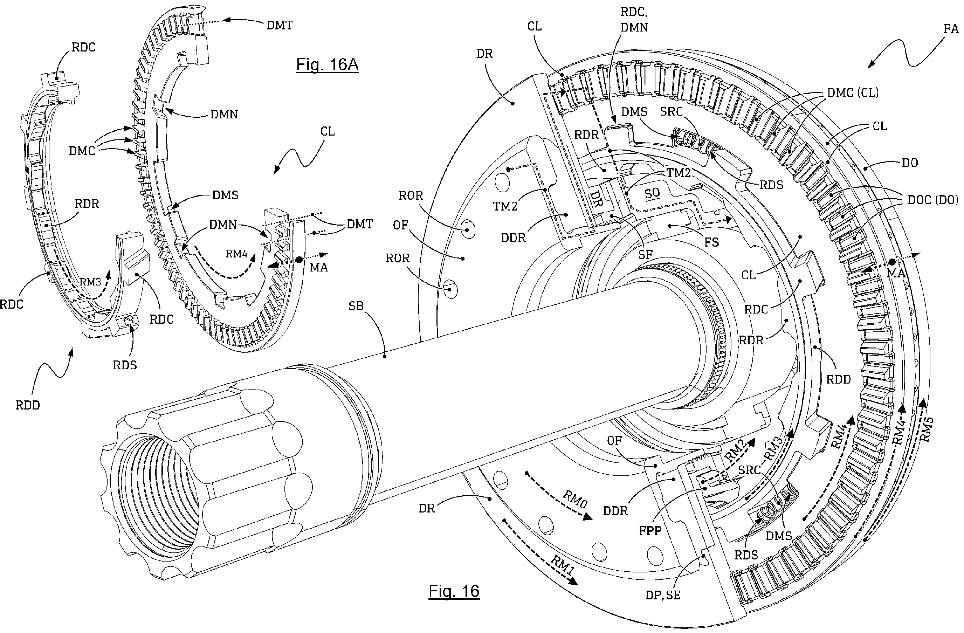

Auf ähnliche Weise ist der Ratschenscheiben-Antreiber DDR mittels Mitnehmervorsprüngen DP und formkorrespondierenden Eingriffsaufnahmen SE der Ratschenscheibe DR (nicht sichtbar in Fig. 18, s. jedoch Fig. 9 oder Fig. 16) mit der Ratschenscheibe DR verbunden.

Mittels der in Fig. 18 ersichtlichen Mitnahmeverzahnungen TD1 bzw. TD2 sind Abtriebsscheibe DA mit Abtriebswelle SO bzw. Ratschenscheiben-Antreiber DDR mit Outputflansch OF der Getriebeeinrichtung CG verbunden (vgl. Fig. 3).

Durch den entsprechend großen Durchmesser der Freilauf-Verzahnungsanordnung, die durch Klauen DMC und DOC sowie formkorrespondierende Ausnehmungen bzw. Durchbrüche DRC und DMT gebildet wird, ergibt sich die Möglichkeit, eine Vielzahl entsprechender Klauen DMC, DOC und Ausnehmungen bzw. Durchbrüche DRC, DMT auf dem entsprechend großen Umfang der Verzahnungsanordnung DMC, DOC, DRC, DMT anzuordnen, was besonders deutlich aus Fig. 9/9A hervorgeht. Zudem ergeben sich aufgrund des großen Durchmessers der Verzahnungsanordnung DMC, DOC, DRC, DMT entsprechend des Hebelgesetzes bei unverändertem Drehmoment reduzierte Kräfte, die von der Verzahnungsanordnung DMC, DOC, DRC, DMT zu übertragen sind.

Mit diesem Hintergrund besteht zumindest eines der Koppelelemente DR, CL, DO der Axialfreilaufeinrichtung FA, vorzugsweise mehrere oder alle Koppelelemente DR, CL, DO, in wesentlichen Teilen aus einem Polymerwerkstoff, insbesondere in den Bereichen der Klauen DMC und DOC, Ausnehmungen bzw. Durchbrüche DRC und DMT, also im Bereich der hierdurch gebildeten Verzahnungsanordnung DMC, DOC, DRC, DMT. Dies erlaubt eine besonders freie Formgebung sowie eine sehr kostengünstige Herstellung der Koppelelemente DR, CL bzw. DO. Weiterhin wird auf diese Weise Gewicht gespart, und die Axialfreilaufeinrichtung FA ist aufgrund der Elastizität und Dämpfungseigenschaften des Polymermaterials besonders geräuscharm.

Bei der dargestellten Axialfreilaufeinrichtung FA handelt es sich zudem um eine aktiv gesteuerte Axialfreilaufeinrichtung, bei welcher der gegenseitige Eingriff der Koppelelemente DR, CL, DO mittels einer Steuereinrichtung RDD, RDC, DMN, FPP drehrichtungsabhängig aktiv gesteuert wird.

Hierzu umfasst die Axialfreilaufeinrichtung FA einen Primärfreilauf FP mit einer Ratschenverzahnung RDR und mit Primär-Freilaufklinken FPP. Die Freilaufklinken FPP sind schwenkbar in entsprechenden Kragenvertiefungen CO in einem Kragenvorsprung PT der Ratschenscheibe DR angeordnet.

Bei ausgekoppelter Axialfreilaufeinrichtung FA befindet sich der in axialer Richtung MA verschiebbare Klauenring CL der Axialfreilaufeinrichtung FA in einer bezogen auf die Figuren rechtsseitigen Ausgangsposition (vgl. Fig. 5, 6 und 9).

In dieser Ausgangsposition des axial verschiebbaren Klauenrings CL greifen die Klauen DMC des Klauenrings CL nicht in die zugehörigen Ausnehmungen DRC der Ratschenscheibe DR ein (s. Fig. 5, 6, 9 und 10), so dass die Output-Klauenscheibe DO der Axialfreilaufeinrichtung FA, die mittels Mitnehmervorsprüngen DP der Output-Klauenscheibe DO und formkorrespondierenden Eingriffsaufnahmen SE der Abtriebsscheibe DA über die vorzugsweise metallische Abtriebsscheibe DA mit der Abtriebswelle SO verbunden ist, zusammen mit der Abtriebswelle SO frei gegenüber der Ratschenscheibe DR und damit gegenüber Getriebeeinrichtung CG und Motoreinrichtung MD rotieren kann.

Diese freie Rotation der Abtriebswelle SO gegenüber Getriebeeinrichtung CG und Motoreinrichtung MD erfolgt bei ausgekoppelter Axialfreilaufeinrichtung FA nahezu reibungsfrei, da in diesem Zustand nur die geringe Reibung des lediglich zur Ansteuerung der Axialfreilaufeinrichtung FA ausgelegten Primärfreilaufs FP, FPP überwunden werden muss.

Somit ergibt sich bei ausgeschalteter Motoreinrichtung MD, oder wenn der Fahrer über die von der Motoreinrichtung MD gelieferte Unterstützungsgeschwindigkeit hinaus beschleunigt, ein natürliches und reibungsfreies Fahrgefühl des Fahrrads, da keinerlei Bestandteile der Getriebeeinrichtung oder der Motoreinrichtung MD vom Fahrer mit in Rotation versetzt oder gehalten werden müssen.

Sobald die Motoreinrichtung MD in Betrieb gesetzt wird, fließt Motordrehmoment TM 1 durch die Getriebeeinrichtung CG und von dieser als Getriebedrehmoment TM2 durch den Outputflansch OF der Getriebeeinrichtung CG über den vorzugsweise metallischen Ratschenscheiben-Antreiber DDR in die Ratschenscheibe DR und versetzt diese in Rotation (vgl. Fig. 5, 6 und 9). Durch die rotatorisch mit der Ratschenscheibe DR verbundenen Primär-Freilaufklinken FPP (vgl. Fig. 9) wird sodann mittels dessen Ratschenverzahnung RDR der Klauenring-Ratschentreiber RDD (s. Fig. 9/9A) rotatorisch im Uhrzeigersinn mitgenommen (bezogen auf die Blickrichtung von rechts gemäß Fig. 1). Aufgrund der Schrägnocken RDC des Ratschentreibers RDD des Primärfreilaufs FP, welche in entsprechende Schrägnuten DMN des Klauenrings CL eingreifen (vgl. Fig. 9/9A), wird der Klauenring CL dabei in Axialrichtung nach links verschoben.

Dieser Moment der axialen Verschiebung MA des Klauenrings CL nach links in Richtung der mit dem Outputflansch OF des Zykloidgetriebes CG fest verbundenen Ratschenscheibe DR ist in Fig. 10 dargestellt. Man erkennt, dass hierdurch die Klauen DMC des Klauenrings CL in formschlüssigen Eingriff mit den Ausnehmungen DRC der Ratschenscheibe DR kommen. Hierdurch teilt sich die motorische Rotation der Ratschenscheibe DR dem Klauenring CL mit, und dieser wird aufgrund der ebenfalls in Fig. 10 gut erkennbaren schrägen Sägezahnform seiner Klauen DMC, zusätzlich zur Wirkung der Schrägnocken RDC des Ratschentreibers RDD und der Schrägnuten DMN des Klauenrings CL (vgl. Fig. 9/9A), näher an die Ratschenscheibe DR herangezogen, bis der Klauenring CL linksseitig vollständig an der Ratschenscheibe DR zur Anlage kommt.

In dieser Relativposition von Ratschenscheibe DR, Klauenring CL und Klauenscheibe DO wird sodann das Motor- bzw. Getriebedrehmoment TM2 über den Kraftflussweg "Outputflansch OF -> Ratschenscheiben-Antreiber DDR -> Ratschenscheibe DR -> Ratschenscheiben-Ausnehmungen DRC -> Klauenring-Klauen DMC -> Klauenring-Durchbrüche DMT -> Klauenscheiben-Klauen DOC -> Klauenscheibe DO -> Abtriebsscheibe DA" (vgl. Fig. 5, 6, 9 und 10) in die Abtriebswelle SO eingeleitet, wo es sich im axialen Bereich des Klemmkörperfreilaufs FS mit einem etwaigen Fahrerdrehmoment TRL, TRR vereinigt (s. Fig. 5) und von dort über einen Kettenrad-Spider SP in das Fahrrad-Kettenrad RC und damit in den Antriebsstrang TP eingeleitet wird (s. Zusammenschau von Fig. 5, Fig. 9, Fig. 10 und Fig. 1). Siehe hierzu auch die in Fig. 9/9A gekennzeichneten Rotationsbewegungen RM0 (Outputflansch OF), RM1 (Ratschenscheibe DR), RM2 (Primär-Freilaufklinken FPP), RM3 (Ratschentreiber RDD), RM4 (Klauenring CL) und RM5 (Klauenscheibe DO).

Bei Wegfall des Motordrehmoments TM1, TM2, oder wenn der Fahrer über die von der Motoreinrichtung MD erbrachte Unterstützungsgeschwindigkeit hinaus beschleunigt, wird die motor- bzw. getriebeseitige Ratschenscheibe DR von der fahrer- bzw. abtriebsseitigen Klauenscheibe DO überholt. Da Klauenscheibe DO und Klauenring CL aufgrund des formschlüssigen Durchgriffs der Klauenscheiben-Klauen DOC durch die Klauenring-Durchbrüche DMT rotatorisch weitestgehend fest miteinander gekoppelt sind wird die motor- bzw. getriebeseitige Ratschenscheibe DR somit auch vom Klauenring CL überholt. Aufgrund der nichtlastflankenseitig abgeschrägten Klauenring-Klauen DMC wird der Klauenring CL hierdurch axial nach zeichnungsbezogen rechts verdrängt (MA) und gerät dadurch außer Eingriff mit der Ratschenscheibe DR.

Zu der axialen Bewegung des Klauenrings CL trägt auch die Wirkung der Schrägnocken RDC des Ratschentreibers RDD bei, die durch die Klauenring-Rückstellfedern SRC federbelastet in den Schrägnuten DMN des Klauenrings CL aufgenommen sind. Nachdem der Klauenring CL außer Eingriff mit der Ratschenscheibe DR kommt, führt die Federkraft der Klauenring-Rückstellfedern SRC mittels des Zusammenwirkens der Schrägnocken RDC und der Schrägnuten DMN zur Fortsetzung der Bewegung MA des Klauenrings CL zeichnungsbezogen nach rechts (vgl. Fig. 9, 10 und 18) so lange, bis der Klauenring CL an der Klauenscheibe DO zur Anlage kommt (vgl. Fig. 5 und 6).

In diesem Zustand gemäß Fig. 5 und 6 ist der Axialfreilauf FA vollständig außer Eingriff, weshalb dieser dann auch völlig geräuschlos ist, abgesehen von einem minimalen Geräusch des Primärfreilaufs FP, der lediglich zur Erzeugung der für die axiale Bewegung MA des Klauenrings CL erforderlichen geringen Kräfte ausgelegt zu werden braucht.

Die Axialfreilaufeinrichtung FA lässt sich prinzipiell auch beim Einsatz eines Zykloidgetriebes CG gemäß Stand der Technik in einer Fahrrad-Antriebseinheit DU, und auch beim Einsatz anderer Getriebeformen wie beispielsweise Planetengetrieben realisieren. Auch eignet sich die Axialfreilaufeinrichtung FA für andere Anwendungen, bei denen ein effizienter, gewichtssparender und geräuscharmer Freilauf benötigt wird, s. nur beispielsweise für Fahrrad-Hinterradnaben.

Fig. 7 zeigt, insbesondere in Zusammenschau mit Fig. 5, Fig. 6 und Fig. 10, die spezielle Anordnung des scheibenförmigen Tachoelements TE und des zugehörigen Drehzahlsensorelements STM. Das Tachoelement TE ist mittels eines Drehzahlmesser-Mitnehmers DT (vgl. Fig. 5 bis 7) drehfest mit der Tretlagerwelle SB verbunden.

Insbesondere in Fig. 5 und 6 ist ersichtlich, dass sich das Tachoelement TE im Inneren der Axialfreilaufeinrichtung FA befindet, wobei Tachoelement TE und zugehöriges Drehzahlsensorelement STM auf gegenüberliegenden Seiten der vom Getriebedrehmoment TM2 durchströmten Abtriebsscheibe DA, welche funktionell als Wandung eines Bereichs bzw. Abschnitts der Abtriebswelle SO angesehen werden kann, angeordnet sind.

Dies bedeutet mit anderen Worten, dass die Messung der Drehzahl der Tretlagerwelle SB durch Erfassung der Drehzahl des Tachoelements TE durch die mit der Abtriebsscheibe DA gegebene Wandung eines Abtriebswellenabschnitts hindurch erfolgt. Hierzu besteht die Abtriebsscheibe DA vorzugsweise aus Aluminium, während das Tachoelement TE vorzugsweise aus Stahl besteht. Auf diese Weise kann die Drehzahl des Tachoelements TE, dessen gezähnte Gestalt TDT deutlich aus Fig. 7 hervorgeht, beispielsweise mittels eines auf Magnetfeld-Erfassung basierenden Drehzahlsensorelements STM, ungestört durch das Vorhandensein der Abtriebsscheibe DA sowie ungestört durch deren etwaige Rotation, zuverlässig erfolgen.

Diese spezielle Anordnung des Tachoelements TE innerhalb der Axialfreilaufeinrichtung FA und auf der dem Drehzahlsensorelement STM gegenüberliegenden Seite der vom Getriebedrehmoment durchströmten Wandung DA eines Abtriebswellenabschnitts erlaubt einerseits die besonders platzsparende Anordnung der Baugruppen der Antriebseinheit DU, insbesondere der Axialfreilaufeinrichtung FA, und andererseits die Vereinigung vorzugsweise aller drei Sensoreinrichtungen 1. Drehzahlsensoreinrichtung TMS mit Drehzahlsensorelement STM, 2. Drehmomentsensoreinrichtung mit Drehmomentsensorelement CC, TS und 3. Geschwindigkeitssensoreinrichtung mit Geschwindigkeitssensorelement SSP der Antriebseinheit DU im Bereich einer einzigen Elektronikeinrichtung AP1.

Hierdurch können insbesondere im Wesentlichen sämtliche Elektronik-Baugruppen und Elektronik-Bauteile aller drei Sensoreinrichtungen auf einer einzigen Platineneinrichtung der Elektronikeinrichtung AP1 angeordnet werden, was fliegende elektrische Verbindungen sowie Bauraum einspart, die Zuverlässigkeit der Sensorelektronik maßgeblich erhöht, und die Kosten für Herstellung und Montage der Antriebseinheit DU verringert.

Die spezielle Anordnung des Tachoelements TE innerhalb der Axialfreilaufeinrichtung FA und auf der dem Drehzahlsensorelement STM gegenüberliegenden Seite der vom Getriebedrehmoment durchströmten Wandung DA eines Abtriebswellenabschnitts lässt sich prinzipiell auch beim Einsatz eines Zykloidgetriebes CG gemäß dem Stand der Technik in einer Fahrrad-Antriebseinheit DU, und auch beim Einsatz anderer Getriebeformen wie beispielsweise Planetengetrieben realisieren.

Das Geschwindigkeitssensorelement SSP ist in Fig. 7 und Fig. 8 erkennbar. Das Geschwindigkeitssensorelement SSP dient der Ermittlung der Drehzahl des hinteren Laufrads WB des Fahrrads (vgl. Fig. 1) mittels eines im Bereich der Felge des Laufrads WB oder beispielsweise an einem Luftventil des hinteren Laufrad WB angeordneten Magneten. Durch die Integration des Geschwindigkeitssensorelements SSP in die Antriebseinheit DU entfallen weitere fliegende Verkabelungen am Fahrradrahmen und der damit verbundene Montageaufwand sowie die damit verbundenen Fehlerquellen im Betrieb des Fahrrads. In Fig. 7 ist erkennbar, dass benachbart zu dem Geschwindigkeitssensorelement SSP ein Magnetfluss-Konzentrator DF angeordnet ist. Dieser erhöht die Empfindlichkeit des Geschwindigkeitssensorelements SSP und damit die Zuverlässigkeit der Ermittlung der Geschwindigkeit des Fahrrads.

In Fig. 10 außerdem ersichtlich ist ein vorzugsweise aus Federstahl bestehendes Abstandselement in Form eines Rollen-Anlaufrings RR, welches zwischen den Gehäuserollen RH und der rechtsseitigen Getriebewandung WGR angeordnet ist. Da die Gehäuserollen RH sich u.a. aufgrund geringfügiger elastisch-rotatorischer Verwindung des Zykloidgetriebes CG bei Beaufschlagung mit dem Motordrehmoment TM 1 eine geringfügige Tendenz haben, sich zeichnungsbezogen nach rechts an die Getriebewandung WGR anzuschmiegen, schützt der Rollen-Anlaufring RR die bevorzugt aus Aluminium bestehende Getriebewandung WGR vor Abnutzung und vor insbesondere für das Getriebe schädlicher Spanbildung.

Zum möglichst spielfreien Einschluss der Gehäuserollen RH zwischen den Getriebewandungen WGL und WGR liegt der Rollen-Anlaufring RR nicht flächig an der rechtsseitigen Getriebewandung WGR an, sondern wird durch stegförmig in Radialrichtung verlaufende Axialvorsprünge PA der Getriebewandung WGR, welche sich in Umfangsrichtung winkelbezogen zwischen den Gehäuserollen RH befinden, dergestalt abgestützt, dass sich eine elastisch federnde, in Axialrichtung auf die Gehäuserollen RH wirkende Vorspannung ergibt.

Fig. 8 zeigt nochmals die Elektronikeinrichtung AP1, die bevorzugt eine kreisringsegmentförmige Leiterplatte umfasst, auf der sämtliche Elektronik-Baugruppen und Elektronik-Bauteile aller drei Sensoreinrichtungen angeordnet sind. Ebenso sichtbar ist in Fig. 8 eine weitere Elektronikeinrichtung AP2, deren Leiterplatte ebenfalls kreisringsegmentförmig ausgebildet ist. Die Leiterplatte der Elektronikeinrichtung AP2 kann sämtliche zur direkten Ansteuerung der Motoreinrichtung MD benötigten Elektronik-Baugruppen und Elektronik-Bauteile tragen, beispielsweise auch die hierzu erforderliche Leistungselektronik.

Außerdem sind in Fig. 8 im Gehäuserohr TH angeordnete Mitnehmerausnehmungen HDT gekennzeichnet. In die Mitnehmerausnehmungen HDT greifen linksseitig axial überstehende Enden der Gehäuserollen-Achsen RHP ein (vgl. Fig. 10). Auf diese Weise kann das über die Gehäuserollen RH abzustützende Drehmoment auf kürzestem Weg in das Gehäuserohr TH eingeleitet werden.

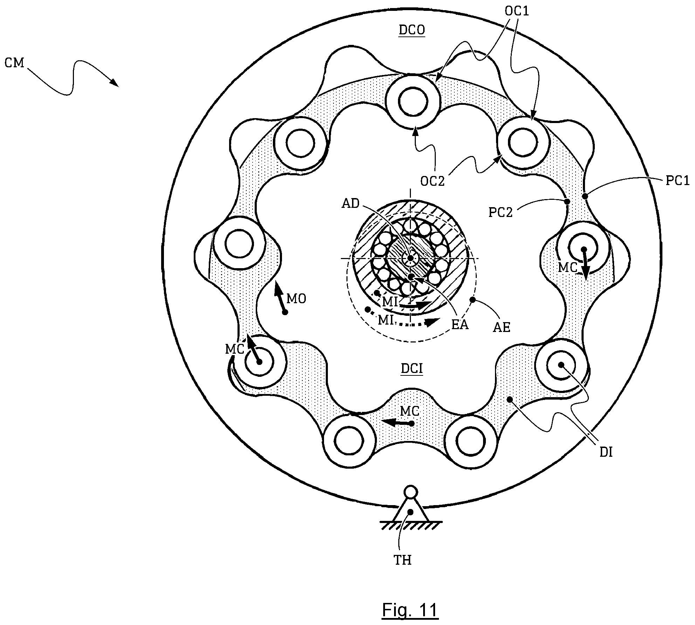

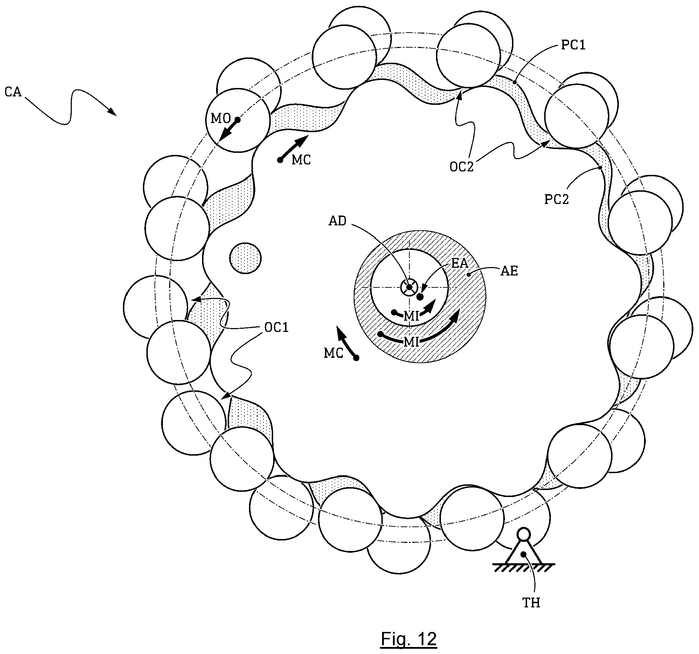

Fig. 11 zeigt ein unter der Bezeichnung "Compur-Getriebe" bekanntes Zykloidgetriebe CG, und Figur 12 ein unter der Bezeichnung "Cyclo-Acbar-Getriebe" bekanntes, weiteres Zykloidgetriebe CG. Auch auf diese Zykloidgetriebe CG-Typen ist die gesamte Lehre gemäß der vorliegenden Offenbarung anwendbar.

Fig. 13 bis 21 zeigen eine weitere Ausführungsform eines Zykloidgetriebes CG bzw. eine weitere Ausführungsform einer Fahrrad-Antriebseinheit DU, wobei die Darstellungen gemäß Fig. 13 bis 21 im Wesentlichen den Darstellungen gemäß Fig. 5 bis 7 und 9 bis 11 entsprechen.

Zykloidgetriebe CG bzw. Antriebseinheit DU gemäß Fig. 13 bis 21 stimmen hinsichtlich Funktion und Anordnung der enthaltenen Baugruppen bzw. Komponenten weitgehend mit dem Zykloidgetriebe CG bzw. der Antriebseinheit DU gemäß Fig. 5 bis 7 und 9 bis 11 überein, sind gegenüber den letzteren jedoch insbesondere funktionell optimiert und konstruktiv verfeinert. Obwohl Fig. 8 die erste Ausführungsform der Fahrrad-Antriebseinheit gemäß Fig. 1 bis 10 zeigt, gelten grundsätzliche Eigenschaften und Funktionen der im Hinblick auf Fig. 8 beschriebenen Komponenten und Baugruppen sinngemäß auch für die weitere Ausführungsform der Fahrrad-Antriebseinheit gemäß Fig. 13 bis 21.

Die nachfolgende Beschreibung der weiteren Ausführungsform im Umfang der Beschreibung von Fig. 13 bis 17 stimmt größtenteils mit der Beschreibung der vorstehenden Ausführungsform gemäß Fig. 5 bis 7 und 9 bis 11 überein. In der nachfolgenden Beschreibung der weiteren Ausführungsform im Umfang der Beschreibung von Fig. 13 bis 17 wurden hauptsächlich die Nummern der Figuren, auf die sich die Beschreibung bezieht, von Fig. 5 bis 7 und 9 bis 11 zu Fig. 13 bis 17 geändert.

Sofern bei der weiteren Ausführungsform gemäß Fig. 13 bis 21 Baugruppen bzw. Komponenten gegenüber der vorstehenden Ausführungsform gemäß Fig. 5 bis 7 und 9 bis 11 hinzugekommen oder wesentlich geändert sind, wird in der nachfolgenden Beschreibung darauf hingewiesen.

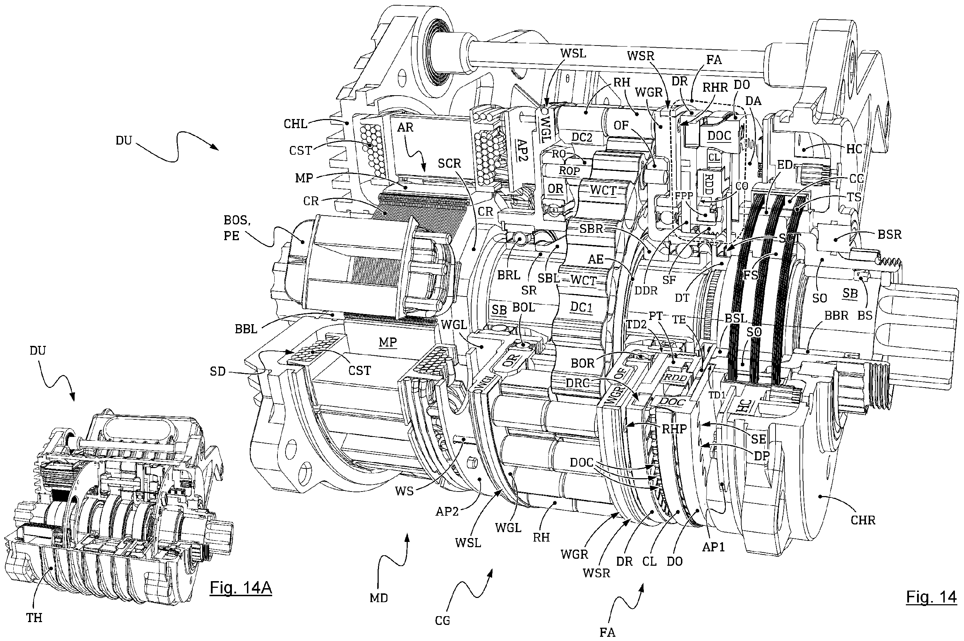

Fig. 13 zeigt eine weitere Ausführungsform einer elektrischen Fahrrad-Antriebseinheit DU mit einem Zykloidgetriebe CG gemäß Fig. 2 bis 4 im Längsschnitt, während die Antriebseinheit DU in Fig. 14 (ohne Gehäuserohr TH) in einer teilweise geschnittenen Schrägansicht dargestellt ist. Fig. 14A zeigt die Antriebseinheit mit Gehäuserohr TH.

Eine Zusammenschau von Fig. 13 bis 15 verdeutlicht die wesentlichen Baugruppen und Komponenten der Antriebseinheit DU, darunter eine elektrische Motoreinrichtung MD mit einer Motor-Rotoreinrichtung AR und einer Motor-Statoreinrichtung SD, das Zykloidgetriebe CG mit zwei Zykloidscheibeneinrichtungen DC1 und DC2, ferner eine Axialfreilaufeinrichtung FA, Elektronikeinrichtungen AP1 und AP2 und eine Sensoranordnung mit Sensoreinrichtungen und deren Sensorelementen SSP, STM und TS.

Die Rotoreinrichtung AR umfasst insbesondere einen beispielsweise ein Rotorblechpaket gemäß Fig. 13 und 14 umfassenden Rotorkern CR sowie Permanentmagnete MP, die beispielsweise formschlüssig von dem Rotorkern CR gehalten sind (vgl. auch Fig. 5, 6 und 8).

Die Statoreinrichtung SD umfasst insbesondere Stator-Endscheiben PE, die sich bei der Ausführungsform gemäß Fig. 13 bis 21 aus einer Anzahl von Stator-Spulenhaltern BOS zusammensetzen (s. Fig. 14), welche an ihrem Außenumfang jeweils eine Stator-Wicklung CST mit Statoranschlussdrähten WS tragen, und in ihrem Inneren jeweils einen Statorzahn ST aufnehmen (in Fig. 14 nicht dargestellt, vgl. jedoch Fig. 5, 6, 8 und 13).

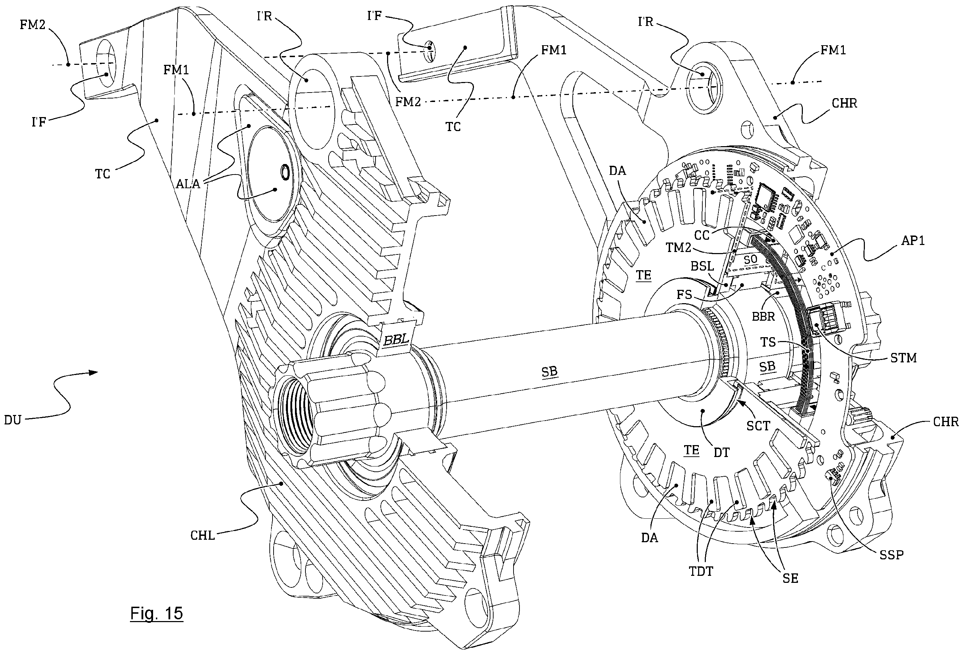

Eine Zusammenschau von Fig. 13 und Fig. 14 verdeutlicht auch die platzsparende Anordnung der Baugruppen und Komponenten der Antriebseinheit DU, die den innerhalb des Gehäuses TH, CHL, CHR zur Verfügung stehenden Bauraum nahezu lückenlos ausfüllen. Hierzu leisten insbesondere die Axialfreilaufeinrichtung FA (vgl. Fig. 14, Fig. 16/16A, Fig. 17 und 18), die Elektronikeinrichtung AP1 mit der gesamten Sensorelektronik aller drei Sensoreinrichtungen (vgl. Fig. 8 und 15) sowie die DrehzahlSensoreinrichtung STM, TE (vgl. Fig. 14 und Fig. 15) wesentliche Beiträge.

Fig. 13 und Fig. 14 zeigen auch eine spezielle Formgebung der Zykloidscheibeneinrichtungen DC1 und DC2. Die Zykloidscheibeneinrichtungen sind im Bereich des Kontakts mit den Gehäuserollen RH in axialer Richtung breiter als im Bereich des Kontakts mit den Abtriebsrollen RO. Dies trägt der Tatsache Rechnung, dass im Bereich des Kontakts der Zykloidscheibeneinrichtungen mit den Gehäuserollen RH aufgrund der beidseitig konvexen Kontaktflächen eine tendenzielle höhere Flächenpressung auftritt als im Bereich des Kontakts der Zykloidscheibeneinrichtungen mit den Abtriebsrollen RO, wo eine konkav-konvexe Kontaktsituation vorliegt, wie Fig. 2 bis 4 deutlich zu entnehmen ist. Um die tendenzielle höhere Flächenpressung im Bereich des Kontakts der Zykloidscheibeneinrichtungen mit den Gehäuserollen RH auszugleichen, sind die Zykloidscheibeneinrichtungen an ihrem Außenumfang entsprechend breiter als im radial weiter innen liegenden Bereich des Kontakts mit den Abtriebsrollen RO. Dies ist insbesondere dann vorteilhaft, wenn die Zykloidscheiben aus Leichtmetall, beispielsweise aus Aluminium bestehen, welches eine gegenüber Stahl geringere Härte auch in den Kontaktbereichen CD1, CD2 mit den Gegenzykloideinrichtungen OC1, OC2 aufweist.

Es sei noch erwähnt, dass anstelle der Gehäuserollen RH auch andere Formen einer gehäusefesten Innenverzahnung eingesetzt werden können. Ebenso können anstelle der Abtriebsrollen RO beispielsweise auch Abtriebs-Stifte oder auf Abtriebs-Stiften angeordnete Abtriebs-Kugellager verwendet werden.

Fig. 13 ist weiterhin zu entnehmen, dass die Getriebeeinrichtung CG durch die beiden Getriebewandungen WGL und WGR sowie durch die beiden Rotorlager BRL, BRR und die Output-Lager BOL, BOR vollständig von den sonstigen Baugruppen der Antriebseinheit DU abgeschlossen, insbesondere zumindest flüssigkeitsdicht abgeschlossen ist. Dies ermöglicht eine optimale und dauerhafte Versorgung der Getriebeeinrichtung CG mit dem entsprechenden Getriebe-Schmierstoff, ohne dass der Schmierstoff aus der Getriebeeinrichtung CG austreten und die Funktion der sonstigen Baugruppen, insbesondere der Motoreinrichtung MD, der Sensoreinrichtungen und der Elektronikeinrichtungen AP1 und AP2 beeinträchtigen kann.

Dank des zumindest flüssigkeitsdichten Abschlusses der Getriebeeinrichtung CG kann vorteilhaft dünnflüssiges oder zumindest relativ niedrigviskoses oder gelartiges Schmiermittel zur Schmierung der Getriebeeinrichtung verwendet werden, was gegenüber üblichen, hochviskosen Schmiermitteln wie beispielsweise Schmierfett eine bessere Verteilung des Schmiermittels und damit eine gründlichere Schmierung und gleichzeitig eine bessere Kühlung der Wälzflächen des Zykloidgetriebes CG ermöglicht.

Der vollständige Abschluss der Getriebeeinrichtung CG von den sonstigen Baugruppen der Antriebseinheit DU wird insbesondere dadurch ermöglicht, dass die Rotorwelle SR ausschließlich in dem Zykloidgetriebe CG gelagert ist, wobei die Rotoreinrichtung AR im Bereich eines fliegenden Endes der Rotorwelle SR auf der Rotorwelle SR angeordnet ist (zeichnungsbezogen links in Fig. 5 bis 10 und Fig. 13 bis 17), sowie dadurch, dass das Drehmoment aus der Getriebeeinrichtung CG mittels eines Outputflanschs OF ausgeleitet wird, welcher mittels einer differentiellen Rotorlagerung BRD zwischen dem Output-Lager BOR und dem rechten Rotorlager BRR gelagert ist.

Eine derartige differentielle Rotorlagerung BRD mit der Anordnung der Rotoreinrichtung AR auf einem fliegenden Ende der Rotorwelle SR lässt sich prinzipiell auch beim Einsatz eines Zykloidgetriebes CG gemäß Stand der Technik in einer Fahrrad-Antriebseinheit DU, und auch beim Einsatz anderer Getriebeformen wie beispielsweise von Planetengetrieben realisieren.

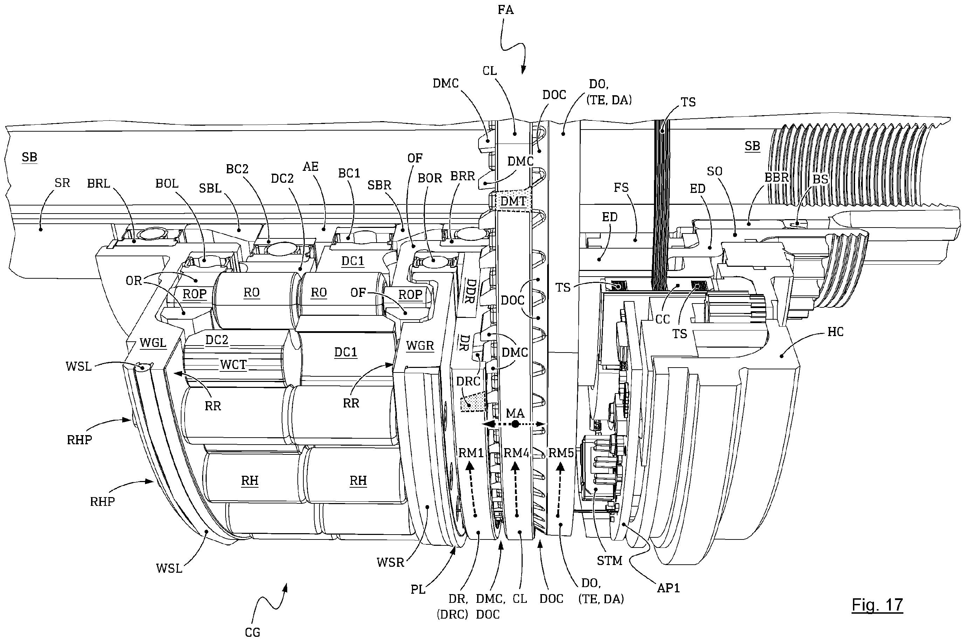

In Zusammenschau mit Fig. 14 und 17 zeigt Fig. 13 auch die Anordnung und Befestigung des Zykloidgetriebes CG im Gehäuserohr TH. Man erkennt, dass die linksseitige Getriebewandung WGL von zeichnungsbezogen rechts bis zu einem Axialanschlag SAE in das Gehäuserohr TH eingeschoben bzw. eingepresst ist. Die rechtsseitige Getriebewandung WGR ist ebenfalls von rechts in das Gehäuserohr TH eingeschoben bzw. eingepresst.

Die Fixierung der rechtsseitigen Getriebewandung WGR erfolgt durch eine rechtsseitige Getriebedichtung WSR, deren Formgebung in Fig. 14 und 17 gut erkennbar ist. Die rechtsseitige Getriebedichtung WSR bildet beim Einpressen der rechtsseitigen Getriebewandung WGR in das Gehäuserohr TH eine Presspassung FP (s. Fig. 13) zwischen der rechtsseitigen Getriebewandung WGR und dem Gehäuserohr TH. Gleichzeitig bildet die rechtsseitige Getriebedichtung WSR eine Rastbefestigung zwischen Getriebewandung WGR und Gehäuserohr TH aus. Dies erfolgt mittels eines umlaufenden Rastvorsprungs PL an der rechtsseitigen Getriebedichtung WSR, welcher in eine formkorrespondierende umlaufende Rastausnehmung RL im Inneren des Gehäuserohrs TH einrastet, und damit unerwünschtes Herauswandern der rechtsseitigen Getriebewandung WGR nach zeichnungsbezogen rechts aus dem Gehäuserohr TH verhindert. Linksseitige und rechtsseitige Getriebedichtung WSL, WSR sowie die zugehörigen Geometrieen am Innenumfang des Gehäuserohrs TH und an den Außenumfängen der linksseitigen und rechtsseitigen Getriebewandungen WGL, WGR können so ausgebildet sein, dass kein direkter metallischer Kontakt zwischen linksseitiger bzw. rechtsseitiger Getriebewandung WGL bzw. WGR und der Innenfläche des Gehäuserohrs TH besteht. Auf diese Weise lässt sich eine effektive Dämpfung von im Zykloidgetriebe entstehenden Schwingungen und Geräuschen erreichen.

Die in Fig. 13 erkennbaren Lagerdistanzstücke SBL, SBR (vgl. auch Fig. 5, 6, 10, 14 und 17) ermöglichen einen geschlossenen Kraftfluss durch Rotorwelle SR, Rotorträgerhülse SCR (vgl. Fig. 14), linkes Rotorlager BRL, linkes Lagerdistanzstück SBL, Exzenteranordnung AE, rechtes Lagerdistanzstück SBR, rechtes Rotorlager BRR und von dort zurück auf die Rotorwelle SR. Auf diese Weise werden diese genannten Bauteile axial gegeneinander verspannt und durch die dabei entstehenden Reibungskräfte auch rotatorisch fest miteinander verbunden. Bezugnehmend auf das Zykloidgetriebe wie in Fig. 2 dargestellt, sowie auf die zugehörige Beschreibung, bilden die in Fig. 13 erkennbaren Bauteile Rotorwelle SR und Exzenteranordnung AE zusammen die Antriebswelleneinrichtung DSD (s. auch Fig. 5, 6 und 14).

Fig. 13 zeigt auch die wesentlichen Kraftflüsse TRL, TRR, TM1 und TM2 durch die Antriebseinheit DU. TRL und TRR sind die vom Fahrer über die Pedalkurbeln PD (vgl. Fig. 1) in die Antriebseinheit DU eingeleiteten linksseitigen bzw. rechtsseitigen Fahrerdrehmomente TRL, TRR, welche über einen Klemmkörperfreilauf FS vereint und dort in radialer Richtung aus der Tretlagerwelle SB in die Abtriebswelle SO eingeleitet werden.

An dieser Stelle ergibt sich sodann die Möglichkeit, die Größe des Fahrerdrehmoments TRL, TRR mittels eines Deformationselements ED berührungslos und insbesondere unbeeinflusst von der Größe des Motor- bzw. Getriebedrehmoments TM2 zu messen, welches (im axialen Bereich des Klemmkörperfreilaufs FS) durch denselben Querschnitt der Abtriebswelle SO wie das Fahrerdrehmoment hindurchgeleitet wird.

Das Deformationselement ED liegt in Form einer Hülse mit Kragen vor und besteht aus einer magnetostriktiv aktiven, beispielsweise Nickel oder Kobalt enthaltenden Legierung. In Abhängigkeit der Größe des durch den Klemmkörperfreilauf FS hindurchgeleiteten Fahrerdrehmoments TRL, TRR erfährt die Abtriebswelle SO im Bereich des Klemmkörperfreilaufs FS durch den Klemmkörperfreilauf FS eine radiale Aufweitung, welche sich dem auf die Abtriebswelle SO beispielsweise aufgepressten Deformationselement ED mitteilt. Aufgrund der radialen Aufweitung des Deformationselements ED ändern sich dessen magnetische bzw. magnetostriktive Eigenschaften. Diese Änderung lässt sich mittels eines Drehmomentsensors TS (vgl. auch Fig. 8, 14, 15 und 17) berührungslos detektieren.

Zur weiteren Verbesserung der Genauigkeit der Ermittlung des Fahrerdrehmoments TRL, TRR durch die Messung der radialen Aufweitung von Klemmkörperfreilauf FS und Deformationselement ED mittels des Drehmomentsensors TS besitzt die Tretlagerwelle SB bei der Ausführungsform gemäß Fig. 13 bis 21 einen Radial-Versteifungssteg RRB. Der Radial-Versteifungssteg RRB vermeidet, dass sich die Wandung der Tretlagerwelle SB im Bereich des Klemmkörperfreilaufs FS bei Beaufschlagung durch Fahrerdrehmomente TRL, TRR nach radial innen verformt, und ermöglicht zudem eine Verringerung der Wandstärken der Tretlagerwelle SB und damit Material- und Gewichtsersparnis.

Wie Fig. 16/ 16A in Zusammenschau mit Fig. 13, 14, 17 und 18 entnommen werden kann, zeichnet sich die Axialfreilaufeinrichtung FA insbesondere dadurch aus, dass der von der Getriebeeinrichtung CG, über die Abtriebsrollen RO und Abtriebsrollen-Achsen ROP (vgl. Fig. 2, 5, 6, 9, 13, 14 und 17) und Abtriebsrollen-Achsaufnahmen ROR (vgl. Fig. 9 und 16) kommende Kraftfluss, also das Getriebedrehmoment TM2, mittels der Koppelelemente DR, CL und DO in Axialrichtung, bezogen auf die Tretlagerwelle SB, durch die Axialfreilaufeinrichtung FA geleitet wird. Bei den Koppelelementen DR, CL und DO handelt es sich um eine Ratschenscheibe DR, einen axial entlang der Richtung MA verschiebbar beweglichen Klauenring CL und eine Output-Klauenscheibe DO.

Wie insbesondere Fig. 16 und Fig. 17 in Zusammenschau mit Fig. 13 zeigen, ist die Axialfreilaufeinrichtung FA im Wesentlichen scheibenförmig flach ausgebildet, wobei das Motor- bzw. Getriebedrehmoment TM2 in einem radial weit außen liegenden Bereich durch die Axialfreilaufeinrichtung FA durchgeleitet wird.

Durch den entsprechend großen Durchmesser der Freilauf-Verzahnungsanordnung, die durch Klauen DMC und DOC sowie formkorrespondierende Ausnehmungen bzw. Durchbrüche DRC und DMT gebildet wird, ergibt sich die Möglichkeit, eine Vielzahl entsprechender Klauen DMC, DOC und Ausnehmungen bzw. Durchbrüche DRC, DMT auf dem entsprechend großen Umfang der Verzahnungsanordnung DMC, DOC, DRC, DMT anzuordnen, was besonders deutlich aus Fig. 16 hervorgeht. Zudem ergeben sich aufgrund des großen Durchmessers der Verzahnungsanordnung DMC, DOC, DRC, DMT entsprechend des Hebelgesetzes bei unverändertem Drehmoment reduzierte Kräfte, die von der Verzahnungsanordnung DMC, DOC, DRC, DMT zu übertragen sind.

Mit diesem Hintergrund besteht zumindest eines der Koppelelemente DR, CL, DO der Axialfreilaufeinrichtung FA, vorzugsweise mehrere oder alle Koppelelemente DR, CL, DO, in wesentlichen Teilen aus einem Polymerwerkstoff, insbesondere in den Bereichen der Klauen DMC und DOC, Ausnehmungen bzw. Durchbrüche DRC und DMT, also im Bereich der hierdurch gebildeten Verzahnungsanordnung DMC, DOC, DRC, DMT. Dies erlaubt eine besonders freie Formgebung sowie eine sehr kostengünstige Herstellung der Koppelelemente DR, CL bzw. DO. Weiterhin wird auf diese Weise Gewicht gespart, und die Axialfreilaufeinrichtung FA ist aufgrund der Elastizität und Dämpfungseigenschaften des Polymermaterials besonders geräuscharm.

Bei der dargestellten Axialfreilaufeinrichtung FA handelt es sich zudem um eine aktiv gesteuerte Axialfreilaufeinrichtung, bei welcher der gegenseitige Eingriff der Koppelelemente DR, CL, DO mittels einer Steuereinrichtung RDD, RDC, DMN, FPP drehrichtungsabhängig aktiv gesteuert wird.

Hierzu umfasst die Axialfreilaufeinrichtung FA einen Primärfreilauf FP mit einer Ratschenverzahnung RDR und mit Primär-Freilaufklinken FPP. Die Freilaufklinken FPP sind schwenkbar in entsprechenden Kragenvertiefungen CO in einem Kragenvorsprung PT der Ratschenscheibe DR angeordnet.

Bei ausgekoppelter Axialfreilaufeinrichtung FA befindet sich der in axialer Richtung MA verschiebbare Klauenring CL der Axialfreilaufeinrichtung FA in einer bezogen auf die Figuren rechtsseitigen Ausgangsposition (vgl. Fig. 13, 14 und 16).

In dieser Ausgangsposition des axial verschiebbaren Klauenrings CL greifen die Klauen DMC des Klauenrings CL nicht in die zugehörigen Ausnehmungen DRC der Ratschenscheibe DR ein (s. Fig. 13, 14 sowie 16 bis 18), so dass die Output-Klauenscheibe DO der Axialfreilaufeinrichtung FA, die mittels Mitnehmervorsprüngen DP der Output-Klauenscheibe DO und formkorrespondierenden Eingriffsaufnahmen SE der Abtriebsscheibe DA über die vorzugsweise metallische Abtriebsscheibe DA mit der Abtriebswelle SO verbunden ist, zusammen mit der Abtriebswelle SO frei gegenüber der Ratschenscheibe DR und damit gegenüber Getriebeeinrichtung CG und Motoreinrichtung MD rotieren kann.

Diese freie Rotation der Abtriebswelle SO gegenüber Getriebeeinrichtung CG und Motoreinrichtung MD erfolgt bei ausgekoppelter Axialfreilaufeinrichtung FA nahezu reibungsfrei, da in diesem Zustand nur die geringe Reibung des lediglich zur Ansteuerung der Axialfreilaufeinrichtung FA ausgelegten Primärfreilaufs FP, FPP überwunden werden muss.

Somit ergibt sich bei ausgeschalteter Motoreinrichtung MD, oder wenn der Fahrer über die von der Motoreinrichtung MD gelieferte Unterstützungsgeschwindigkeit hinaus beschleunigt, ein natürliches und reibungsfreies Fahrgefühl des Fahrrads, da keinerlei Bestandteile der Getriebeeinrichtung oder der Motoreinrichtung MD vom Fahrer mit in Rotation versetzt oder gehalten werden müssen.

Sobald die Motoreinrichtung MD in Betrieb gesetzt wird, fließt Motordrehmoment TM 1 durch die Getriebeeinrichtung CG und von dieser als Getriebedrehmoment TM2 durch den Outputflansch OF der Getriebeeinrichtung CG über den vorzugsweise metallischen Ratschenscheiben-Antreiber DDR in die Ratschenscheibe DR und versetzt diese in Rotation (vgl. Fig. 13, 14 und 16 bis 18). Die Visualisierung des Kraftflusses des Motordrehmoments TM1 als Zickzacklinie durch die Getriebeeinrichtung CG in Fig. 13 und Fig. 5 ist lediglich als symbolische Vereinfachung des tatsächlichen Kraftflusses zu verstehen. Der tatsächliche Kraftfluss durch die Getriebeeinrichtung CG ist Fig. 2 bis 4A zu entnehmen, und in der zugehörigen Figurenbeschreibung ausführlich erläutert.

Durch die rotatorisch mit der Ratschenscheibe DR verbundenen Primär-Freilaufklinken FPP (vgl. Fig. 16 und 18) wird sodann mittels dessen Ratschenverzahnung RDR der Klauenring-Ratschentreiber RDD (s. Fig. 16/ 16A) rotatorisch im Uhrzeigersinn mitgenommen (bezogen auf die Blickrichtung von rechts gemäß Fig. 1).

Aufgrund der Schrägnocken RDC des Ratschentreibers RDD des Primärfreilaufs FP, welche in entsprechende Schrägnuten DMN des Klauenrings CL eingreifen (vgl. Fig. 16/ 16A), wird der Klauenring CL dabei in Axialrichtung nach links verschoben.

Dieser Moment der axialen Verschiebung MA des Klauenrings CL nach links in Richtung der mit dem Outputflansch OF des Zykloidgetriebes CG fest verbundenen Ratschenscheibe DR ist in Fig. 17 dargestellt. Man erkennt, dass hierdurch die Klauen DMC des Klauenrings CL in formschlüssigen Eingriff mit den Ausnehmungen DRC der Ratschenscheibe DR kommen. Hierdurch teilt sich die motorische Rotation der Ratschenscheibe DR dem Klauenring CL mit, und dieser wird aufgrund der ebenfalls in Fig. 17 gut erkennbaren schrägen Sägezahnform seiner Klauen DMC, zusätzlich zur Wirkung der Schrägnocken RDC des Ratschentreibers RDD und der Schrägnuten DMN des Klauenrings CL (vgl. Fig. 16/16A), näher an die Ratschenscheibe DR herangezogen, bis der Klauenring CL linksseitig vollständig an der Ratschenscheibe DR zur Anlage kommt.

In dieser Relativposition von Ratschenscheibe DR, Klauenring CL und Klauenscheibe DO wird sodann das Motor- bzw. Getriebedrehmoment TM2 über den Kraftflussweg "Outputflansch OF -> Ratschenscheiben-Antreiber DDR -> Ratschenscheibe DR -> Ratschenscheiben-Ausnehmungen DRC -> Klauenring-Klauen DMC -> Klauenring-Durchbrüche DMT -> Klauenscheiben-Klauen DOC -> Klauenscheibe DO -> Abtriebsscheibe DA" (vgl. Fig. 13, 14, 16 und 17) in die Abtriebswelle SO eingeleitet, wo es sich im axialen Bereich des Klemmkörperfreilaufs FS mit einem etwaigen Fahrerdrehmoment TRL, TRR vereinigt (s. Fig. 13) und von dort über einen Kettenrad-Spider SP in das Fahrrad-Kettenrad RC und damit in den Antriebsstrang TP eingeleitet wird (s. Zusammenschau von Fig. 13, Fig. 16, Fig. 17 und Fig. 1). Siehe hierzu auch die in Fig. 16/16A gekennzeichneten Rotationsbewegungen RM0 (Outputflansch OF), RM1 (Ratschenscheibe DR), RM2 (Primär-Freilaufklinken FPP), RM3 (Ratschentreiber RDD), RM4 (Klauenring CL) und RM5 (Klauenscheibe DO).

Die Axialfreilaufeinrichtung FA gemäß Fig. 16 bis 18 der weiteren Ausführungsform einer Fahrrad-Antriebseinheit gemäß Fig. 1 bis 4 und 13 bis 21 unterscheidet sich von der Axialfreilaufeinrichtung FA gemäß Fig. 16 und 17 der ersten Ausführungsform einer Fahrrad-Antriebseinheit gemäß Fig. 1 bis 10, neben diversen konstruktiven Verfeinerungen, insbesondere durch eine feinzähnigere Ausführung der jeweiligen Verzahnung von Ratschenscheibe DR, Klauenring CL und Klauenscheibe DO. Durch diese feinzähnigere Ausführung lassen sich über die Axialfreilaufeinrichtung FA entweder höhere Drehmomente übertragen, oder geringere Belastungen pro Klaue DMC, DOC bzw. pro Klauenscheiben-Durchbruch DMT und Ratschenscheiben-Ausnehmung DRC erzielen.

Jeweilige Zusammenschau von Fig. 17 und Fig. 10 bzw. von Fig. 16 und Fig. 9 verdeutlicht auch die zwischen der ersten und der weiteren Ausführungsform unterschiedlichen Zahnformen der Klauen DMC bzw. DOC von Klauenring CL bzw. Klauenscheibe DO, sowie die unterschiedlichen Geometrieen der Klauenscheiben-Durchbrüche DMT und Ratschenscheiben-Ausnehmungen DRC.

Zusätzlich zu der vorgenannten feinzähnigeren Ausführung bei der weiteren Ausführungsform der Axialfreilaufeinrichtung FA gemäß Fig. 16 und 17 sind die Klauen DMC bzw. DOC sowie die Durchbrüche bzw. Ausnehmungen DMT und DRC bei dieser Ausführungsform weniger keilförmig und weniger in Drehrichtung RM0 bis RM5 geneigt, was ein noch zuverlässigeres Schaltverhalten der Axialfreilaufeinrichtung FA bei allen in der Praxis auftretenden Fahrsituationen und Drehmoment-Beaufschlagungen unterstützt.

Auch der Klauenring-Ratschentreiber RDD mit dem in dessen radialem Innenraum angeordneten Primärfreilauf FP, insbesondere dessen Ratschenverzahnung RDR, unterscheidet sich zwischen der ersten und der weiteren Ausführungsform (vgl. Fig. 9/9A und Fig. 16/6A). Die weitere Ausführungsform gemäß Fig. 16/6A ist insbesondere in Bezug auf Zuverlässigkeit, Drehmomentübertragung, Geräuschentwicklung und Steifigkeit der Ratschenverzahnung RDR und der Primärfreilauf-Klinken FPP optimiert.

Bei Wegfall des Motordrehmoments TM1, TM2, oder wenn der Fahrer über die von der Motoreinrichtung MD erbrachte Unterstützungsgeschwindigkeit hinaus beschleunigt, wird die motor- bzw. getriebeseitige Ratschenscheibe DR von der fahrer- bzw. abtriebsseitigen Klauenscheibe DO überholt. Da Klauenscheibe DO und Klauenring CL aufgrund des formschlüssigen Durchgriffs der Klauenscheiben-Klauen DOC durch die Klauenring-Durchbrüche DMT rotatorisch weitestgehend fest miteinander gekoppelt sind wird die motor- bzw. getriebeseitige Ratschenscheibe DR somit auch vom Klauenring CL überholt. Aufgrund der nichtlastflankenseitig abgeschrägten Klauenring-Klauen DMC wird der Klauenring CL hierdurch axial nach zeichnungsbezogen rechts verdrängt (MA) und gerät dadurch außer Eingriff mit der Ratschenscheibe DR.

Zu der axialen Bewegung des Klauenrings CL trägt auch die Wirkung der Schrägnocken RDC des Ratschentreibers RDD bei, die durch die Klauenring-Rückstellfedern SRC federbelastet in den Schrägnuten DMN des Klauenrings CL aufgenommen sind. Nachdem der Klauenring CL außer Eingriff mit der Ratschenscheibe DR kommt, führt die Federkraft der Klauenring-Rückstellfedern SRC mittels des Zusammenwirkens der Schrägnocken RDC und der Schrägnuten DMN zur Fortsetzung der Bewegung MA des Klauenrings CL zeichnungsbezogen nach rechts (vgl. Fig. 16 bis 18) so lange, bis der Klauenring CL an der Klauenscheibe DO zur Anlage kommt (vgl. Fig. 13 und 14).

In diesem Zustand gemäß Fig. 13 und 14 ist der Axialfreilauf FA vollständig außer Eingriff, weshalb dieser dann auch völlig geräuschlos ist, abgesehen von einem minimalen Geräusch des Primärfreilaufs FP, der lediglich zur Erzeugung der für die axiale Bewegung MA des Klauenrings CL erforderlichen geringen Kräfte ausgelegt zu werden braucht.

Die Axialfreilaufeinrichtung FA lässt sich prinzipiell auch beim Einsatz eines Zykloidgetriebes CG gemäß Stand der Technik in einer Fahrrad-Antriebseinheit DU, und auch beim Einsatz anderer Getriebeformen wie beispielsweise Planetengetrieben realisieren. Auch eignet sich die Axialfreilaufeinrichtung FA für andere Anwendungen, bei denen ein effizienter, gewichtssparender und geräuscharmer Freilauf benötigt wird, s. nur beispielsweise für Fahrrad-Hinterradnaben.

Fig. 15 zeigt, insbesondere in Zusammenschau mit Fig. 13, Fig. 14 und Fig. 17, die spezielle Anordnung des scheibenförmigen Tachoelements TE und des zugehörigen Drehzahlsensorelements STM. Das Tachoelement TE ist mittels eines Drehzahlmesser-Mitnehmers DT (vgl. Fig. 13 bis 15) drehfest mit der Tretlagerwelle SB verbunden. Eine Tachoscheiben-Andruckfeder SCT sorgt dabei dafür, dass das scheibenförmige Tachoelement TE, welches rotatorisch fest (beispielsweise durch eine Nockenanordnung), jedoch axial verschieblich auf dem Drehzahlmesser-Mitnehmer DT gelagert ist, am linksseitigen Abtriebswellenlager BSL der Abtriebswelle SO zur Anlage kommt und bleibt.

Auf diese Weise wird das Tachoelement TE toleranzbezogen axial vom Drehzahlmesser-Mitnehmer DT und damit von der Tretlagerwelle SB entkoppelt und stattdessen am linksseitigen Abtriebswellenlager BSL und mit diesem an der Abtriebswelle SO referenziert, welche über das rechtsseitige Abtriebswellenlager BSR, den rechten Gehäusedeckel CHR und den Leiterplattenhalter HC die Toleranzkette zur Leiterplatte der Elektronikeinrichtung AP1 schließt, auf welcher das Drehzahlsensorelement STM angeordnet ist. Diese Toleranzkette gewährleistet einen möglichst konstanten, minimalen Abstand zwischen dem Tachoelement TE und dem zugehörigen Drehzahlsensorelement STM, was zur Zuverlässigkeit der Drehzahlsensoreinrichtung TE, STM beiträgt.

Weiterhin ist insbesondere in Fig. 13 und 14 ersichtlich, dass sich das Tachoelement TE im Inneren der Axialfreilaufeinrichtung FA befindet, wobei Tachoelement TE und zugehöriges Drehzahlsensorelement STM auf gegenüberliegenden Seiten der vom Getriebedrehmoment TM2 durchströmten Abtriebsscheibe DA, welche funktionell als Wandung eines Bereichs bzw. Abschnitts der Abtriebswelle SO angesehen werden kann, angeordnet sind.

Dies bedeutet mit anderen Worten, dass die Messung der Drehzahl der Tretlagerwelle SB durch Erfassung der Drehzahl des Tachoelements TE durch die mit der Abtriebsscheibe DA gegebene Wandung eines Abtriebswellenabschnitts hindurch erfolgt. Hierzu besteht die Abtriebsscheibe DA vorzugsweise aus Aluminium, während das Tachoelement TE vorzugsweise aus Stahl besteht. Auf diese Weise kann die Drehzahl des Tachoelements TE, dessen gezähnte Gestalt TDT deutlich aus Fig. 15 hervorgeht, beispielsweise mittels eines auf Magnetfeld-Erfassung basierenden Drehzahlsensorelements STM, ungestört durch das Vorhandensein der Abtriebsscheibe DA sowie ungestört durch deren etwaige Rotation, zuverlässig erfolgen.

Diese spezielle Anordnung des Tachoelements TE innerhalb der Axialfreilaufeinrichtung FA und auf der dem Drehzahlsensorelement STM gegenüberliegenden Seite der vom Getriebedrehmoment durchströmten Wandung DA eines Abtriebswellenabschnitts erlaubt einerseits die besonders platzsparende Anordnung der Baugruppen der Antriebseinheit DU, insbesondere der Axialfreilaufeinrichtung FA, und andererseits die Vereinigung vorzugsweise aller drei Sensoreinrichtungen 1. Drehzahlsensoreinrichtung TMS mit Drehzahlsensorelement STM, 2. Drehmomentsensoreinrichtung mit Drehmomentsensorelement CC, TS und 3. Geschwindigkeitssensoreinrichtung mit Geschwindigkeitssensorelement SSP der Antriebseinheit DU im Bereich einer einzigen Elektronikeinrichtung AP1.

Hierdurch können insbesondere im Wesentlichen sämtliche Elektronik-Baugruppen und Elektronik-Bauteile aller drei Sensoreinrichtungen auf einer einzigen Platineneinrichtung der Elektronikeinrichtung AP1 angeordnet werden, was fliegende elektrische Verbindungen sowie Bauraum einspart, die Zuverlässigkeit der Sensorelektronik maßgeblich erhöht, und die Kosten für Herstellung und Montage der Antriebseinheit DU verringert.

Die spezielle Anordnung des Tachoelements TE innerhalb der Axialfreilaufeinrichtung FA und auf der dem Drehzahlsensorelement STM gegenüberliegenden Seite der vom Getriebedrehmoment durchströmten Wandung DA eines Abtriebswellenabschnitts lässt sich prinzipiell auch beim Einsatz eines Zykloidgetriebes CG gemäß dem Stand der Technik in einer Fahrrad-Antriebseinheit DU, und auch beim Einsatz anderer Getriebeformen wie beispielsweise Planetengetrieben realisieren.

Das Drehzahlsensorelement STM kann insbesondere mehrere Sensorelemente enthalten, die insbesondere in Umfangsrichtung, bezogen auf das Tachoelement TE, beabstandet angeordnet sind. Auf diese Weise kann nicht nur die Drehzahl des Tachoelements TE, sondern auch dessen Drehrichtung erfasst werden, wodurch die Fahrrad-Antriebseinheit DU sowie etwaige mit der Fahrrad-Antriebseinheit DU informationell verbundene weitere Fahrradkomponenten, beispielsweise ein Schaltwerk RP des Fahrrad-Antriebsstrangs TP, in allen Betriebszuständen noch zuverlässiger gesteuert werden kann.

Das Geschwindigkeitssensorelement SSP ist in Fig. 8 und Fig. 15 erkennbar. Das Geschwindigkeitssensorelement SSP dient der Ermittlung der Drehzahl des hinteren Laufrads WB des Fahrrads (vgl. Fig. 1) mittels eines im Bereich der Felge des Laufrads WB oder beispielsweise an einem Luftventil des hinteren Laufrad WB angeordneten Magneten. Durch die Integration des Geschwindigkeitssensorelements SSP in die Antriebseinheit DU entfallen weitere fliegende Verkabelungen am Fahrradrahmen und der damit verbundene Montageaufwand sowie die damit verbundenen Fehlerquellen im Betrieb des Fahrrads. Vorzugsweise wird benachbart zu dem Geschwindigkeitssensorelement SSP ein zusätzlicher Magnetfluss-Konzentrator DF angeordnet (in Fig. 15 nicht dargestellt, vgl. jedoch Fig. 7). Dieser erhöht die Empfindlichkeit des Geschwindigkeitssensorelements SSP und damit die Zuverlässigkeit der Ermittlung der Geschwindigkeit des Fahrrads.

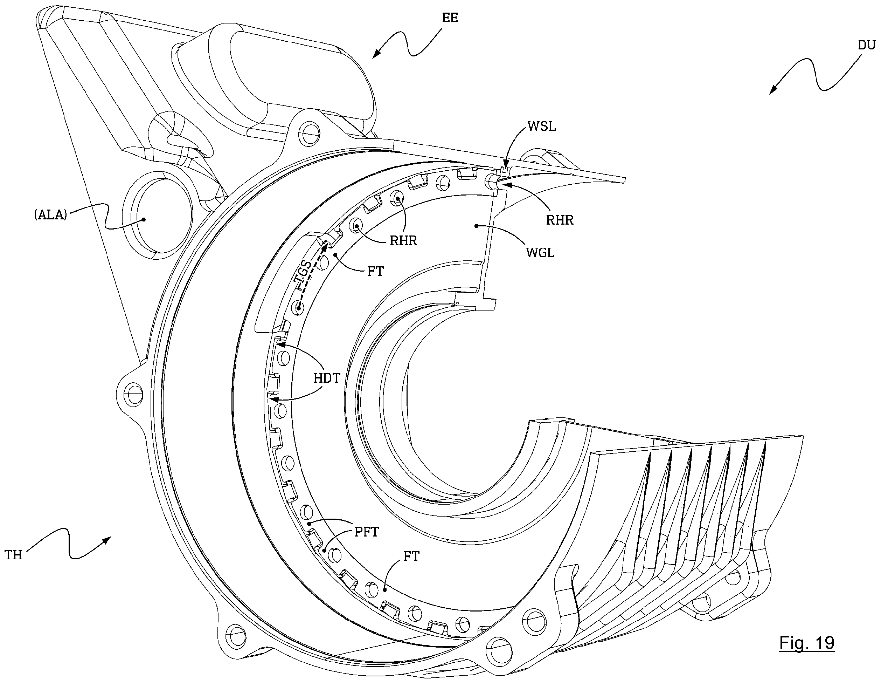

In Fig. 15 außerdem erkennbar ist eine Antennen-LED-Baugruppe ALA (vgl. auch Fig. 19). Die Antennen-LED-Baugruppe ALA ist in einem Durchbruch des vorzugsweise metallischen linksseitigen Gehäusedeckels CHL angeordnet und besteht zumindest teilweise aus einem nichtmetallischen Werkstoff wie beispielsweise einen Polymermaterial. Der nichtmetallische Werkstoff ermöglicht eine drahtlose steuernde Kommunikation zwischen der Antriebseinheit DU und anderen Komponenten am Fahrrad, beispielsweise mit einem Schaltwerk RD (vgl. Fig. 1) oder mit einem am Fahrradrahmen oder am Fahrradlenker angeordneten Human Machine Interface zur Betätigung der Antriebseinheit DU oder zur Einstellung von Betriebsoptionen der Antriebseinheit DU.

In Fig. 15 sind weiterhin zwei Befestigungsachsen FM1, FM2 gezeigt, welche zwei Rahmenschnittstellen-Achsen definieren, im Bereich derer die Antriebseinheit DU mit dem Fahrradrahmen 1 verbindbar ist (vgl. auch Fig. 7, 8 und 15). Dabei dienen die im Bereich der hinteren Befestigungsachse FM1 angeordneten hinteren Rahmenschnittstellen I'R der Festlegung sämtlicher Bewegungsfreiheitsgrade der Antriebseinheit DU gegenüber dem Rahmen des Fahrrads 1, außer dem Rotationsfreiheitsgrad um die hintere Befestigungsachse FM1 mit den dort angeordneten vorderen Rahmenschnittstellen I'F.

Dies bedeutet, dass über die hinteren Rahmenschnittstellen I'R sämtliche Kräfte und Drehmomente zwischen der Antriebseinheit DU und dem Fahrradrahmen übertragbar sind, mit der Ausnahme von Drehmomenten, die um die hintere Befestigungsachse FM1 wirken. Der verbleibende Rotationsfreiheitsgrad um die hintere Befestigungsachse FM1 gegenüber dem Fahrradrahmen ist mittels der vorderen Rahmenschnittstellen I'F über die Drehmomentausleger TC der Gehäusedeckel CHR, CHL des Gehäuses der Antriebseinheit DU festgelegt bzw. festlegbar.

In Fig. 17 sind außerdem zwei vorzugsweise aus Federstahl bestehende Abstandselemente in Form zweier Rollen-Anlaufringe RR ersichtlich, welche zwischen den Gehäuserollen RH und der jeweiligen Getriebewandung WGL, WGR angeordnet ist. Da die Gehäuserollen RH sich u.a. aufgrund unvermeidlicher Toleranzen und/oder aufgrund geringfügiger elastisch-rotatorischer Verwindung des Zykloidgetriebes CG bei Beaufschlagung mit dem Motordrehmoment TM 1 eine geringfügige Tendenz haben, sich zeichnungsbezogen horizontal an eine der oder beide Getriebewandungen WGL, WGR anzuschmiegen, schützen die Rollen-Anlaufringe RR die bevorzugt aus Aluminium bestehenden Getriebewandungen WGL, WGR vor Abnutzung und vor insbesondere für das Getriebe schädlicher Spanbildung.

Fig. 19 zeigt das Gehäuserohr TH der weiteren Ausführungsform gemäß Fig. 13 bis 21 mit darin angeordneter linksseitiger Getriebewandung WGL (vgl. Fig. 5 und 6 sowie Fig. 10, 13, 14 und 17), sowie einen Drehmomentflansch FT zur Abstützung des von der Getriebewandung WGL auf das Gehäuserohr TH zu übertragenden Getriebe-Abstützdrehmoments TGS.

Das Getriebe-Abstützdrehmoment TGS entsteht aufgrund der in Fig. 2 bis 3 ersichtlichen, in Umfangsrichtung auf die Gehäuserollen RH wirkenden Kraftkomponenten FD. Die Summe diese0r Kraftkomponenten FD, bzw. dass daraus entstehende Getriebe-Abstützdrehmoment TGS wird von den Gehäuserollen RH über die Gehäuserollen-Achsen RHP und über Gehäuserollen-Achsaufnahmen RHR in die linksseitige Getriebewandung WGL eingeleitet (vgl. Fig. 6, 10 und 17). Von den axial linksseitig über die Getriebewandung WGL überstehenden Gehäuserollen-Achsen RHP (vgl. Fig. 10, 13 und 17) und/oder von der linksseitigen Getriebewandung WGL wird das Getriebe-Abstützdrehmoment TGS in den Drehmomentflansch FT und von diesem in das Gehäuserohr TH eingeleitet.

Der Drehmomentflansch FT besteht vorzugsweise aus einem schwingungsdämpfenden Material, besonders bevorzugt aus einem entsprechenden Polymermaterial. Dies trägt zur Reduktion extern wahrnehmbarer Geräusche der Fahrrad-Antriebseinheit DU und zur Dämpfung von Drehmomentspitzen bei, was auch der Lebensdauer des Zykloidgetriebes CG förderlich ist.

Ferner erlaubt der Drehmomentflansch FT eine freiere Gestaltung der Geometrie des Mitnehmerausnehmungen HDT am Innenumfang des Gehäuserohrs TH (vgl. Fig. 8 und Fig. 13), die aufgrund der beengten Verhältnisse im Inneren des Gehäuserohrs TH ansonsten vergleichsweise aufwändig zu fertigen wären, beispielsweise durch Räumen.

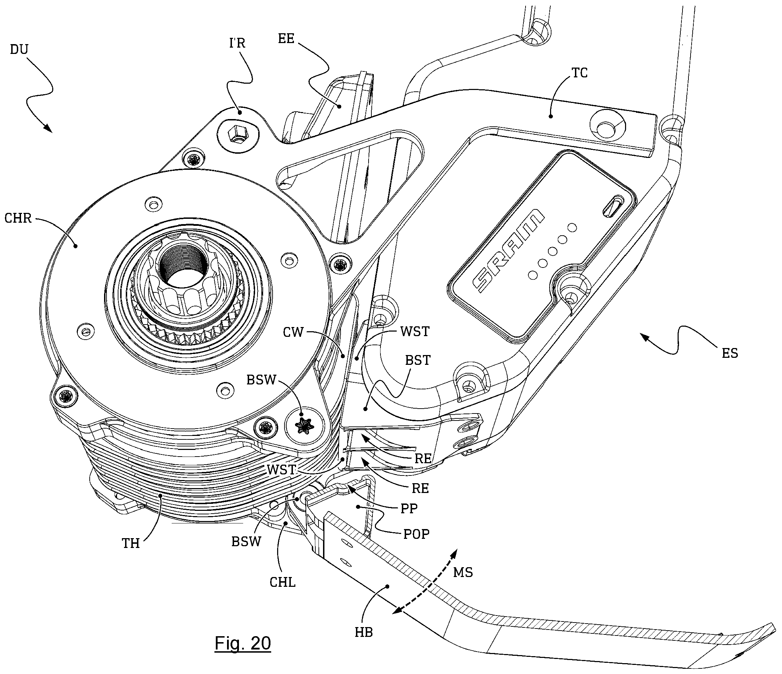

Fig. 20 zeigt eine Fahrrad-Antriebseinheit mit Zykloidgetriebe beispielsweise gemäß Fig. 1 bis 4 und 13 bis 19, zusammen mit einer Energiespeichereinrichtung ES (vgl. Fig. 1) in teilweise geschnittener Perspektivansicht.

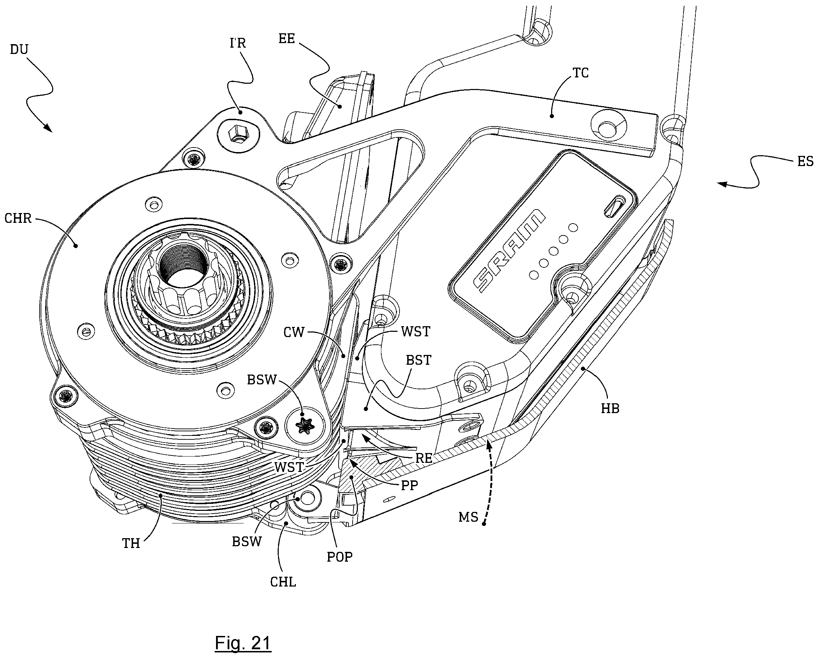

Fig. 21 zeigt die Fahrrad-Antriebseinheit gemäß Fig. 20 mit geschlossener Batterieklappe HB. Die Batterieklappe HB ist in Fig. 20 und 21 jeweils geschnitten dargestellt, um die nachfolgend beschriebenen Komponenten und deren Funktionen besser erkennen zu können.

Die Batterieklappe HB ist mittels Schwenkbolzen BSW mit den rechten und linken Gehäusedeckeln CHR, CHL schwenkbar verbunden. Bei geöffneter Batterieklappe HB kann die Energiespeichereinrichtung ES im wesentlichen nach zeichnungsbezogen unten entnommen werden. Hierzu lässt sich die Batterieklappe HB weiter öffnen als in Fig. 20 dargestellt.

Die Energiespeichereinrichtung ES weist in ihrem zeichnungsbezogen unteren Bereich eine Anschlagskonsole BST auf, die entweder mit dem Gehäuse der Energiespeichereinrichtung ES verbunden, beispielsweise verschraubt sein kann, oder einstückig mit dem Gehäuse der Energiespeichereinrichtung ES ausgebildet sein kann.

Die Anschlagskonsole BST der Energiespeichereinrichtung ES weist im Bereich von Eingriffsausnehmungen RE eine Anschlagswandung WST auf. Die Anschlagswandung WST ist beim Einsetzen der Energiespeichereinrichtung ES an einer formkorrespondierenden Gegenwandung CW des Gehäuserohrs TH zur Anlage bringbar.

Nach dem Einsetzen der Energiespeichereinrichtung ES befindet sich diese im wesentlichen in der in Fig. 20 dargestellten Relativposition zur Antriebseinheit DU, insbesondere zum Gehäuserohr TH.

Wird sodann die Batterieklappe HB durch Schwenkbewegung MS um die Schwenkbolzen BSW geschlossen, so dringt ein mit der Batterieklappe HB beispielsweise einstückig ausgebildeter Andruckvorsprung POP in die Eingriffsausnehmungen RE der Anschlagskonsole BST ein. Hierdurch wird die Anschlagswandung WST der Anschlagskonsole BST an die entsprechende Gegenwandung CW des Gehäuserohrs TH gepresst. Gleichzeitig wird durch eine in Fig. 20 ersichtliche Schubkontur PP, welche hierzu mit dem zeichnungsbezogen unteren Ende der Anschlagswandung WST der Anschlagskonsole BST interagiert, die Energiespeichereinrichtung ES zeichnungsbezogen nach oben an die korrekte, finale Einschubposition gemäß Fig. 20 geschoben.

Das Anpressen der Anschlagswandung WST der Anschlagskonsole BST an die entsprechende Gegenwandung CW des Gehäuserohrs TH durch die schließende und geschlossene Batterieklappe HB ermöglicht eine erhebliche Dämpfung von Schwingungen und Geräuschen, die ansonsten über die Oberflächen des Gehäuserohrs TH als Schall abgestrahlt würden. Hierzu trägt insbesondere die vergleichsweise hohe Masse der Energiespeichereinrichtung ES bei, in Verbindung mit der Auswahl eines schwingungsdämpfenden Polymermaterials für die Anschlagskonsole BST der Energiespeichereinrichtung ES.

## Patentansprüche

1. **Zykloidgetriebe** (CG) für eine elektrische Fahrrad-Antriebseinheit (DU), das Zykloidgetriebe (CG) umfassend
- eine Antriebswelleneinrichtung (DSD) mit einer Exzenteranordnung (AE) und eine Abtriebswelleneinrichtung (SO), wobei Antriebswelleneinrichtung (DSD) und Abtriebswelleneinrichtung (SO) zueinander sowie zu einer Mittelachse (AC) des Zykloidgetriebes (CG) konzentrisch angeordnet sind,
- zumindest eine Zykloidscheibeneinrichtung (DC1, DC2) mit zusammen zumindest zwei zumindest näherungsweise zykloidischen oder zylindrischen Zykloidverzahnungsanordnungen (CT1, CT2) und
- zumindest eine Gegenzykloideinrichtung (OC1, OC2) mit zusammen zumindest zwei zumindest näherungsweise zykloidischen oder zylindrischen Gegenverzahnungsanordnungen (OT1, OT2),
wobei die zumindest eine Zykloidscheibeneinrichtung (DC1, DC2) und die zumindest eine Gegenzykloideinrichtung (OC1, OC2) zu einem drehmomentübertragend formschlüssigen gegenseitigen Eingriff eingerichtet sind,
und wobei die zumindest eine Zykloidscheibeneinrichtung (DC1, DC2) und/oder die zumindest eine Gegenzykloideinrichtung (OC1, OC2) durch rotatorischen Antrieb mittels der Exzenteranordnung (AE) in eine gegenüber der Mittelachse (MA) exzentrisch-zykloidale Relativ-Abwälzbewegung (MC) bringbar sind,
durch welche in Kontaktbereichen (CD1, CD2) mittels Antriebskontakt zwischen Zykloidscheiben-Konturen (PC1, PC2) der Zykloidverzahnungsanordnungen (CT1, CT2) der zumindest einen Zykloidscheibeneinrichtung (DC1, DC2) und Gegenzykloid-Konturen (PO1, PO2) der Gegenverzahnungsanordnungen (OT1, OT2) der zumindest einen Gegenzykloideinrichtung (OC1, OC2) zumindest innerhalb eines jeweiligen Lastflanken-Teilbereichs (AL1, AL2) der jeweiligen Kon-tur (PC1, PC2, PO1, PO2) der jeweiligen Verzahnungsanordnung Antriebskräfte (FD1, FD2) in Umfangsrichtung des Zykloidgetriebes (CG) übertragbar sind,
**dadurch gekennzeichnet,**
**dass** zumindest eine der Zykloidverzahnungsanordnungen (CT1, CT2) und/oder zumindest eine der Gegenverzahnungsanordnungen (OT1, OT2) entlang eines außerhalb des jeweiligen Lastflanken-Teilbereichs (AL1, AL2) der jeweiligen Kontur (PC1, PC2, PO1, PO2) der jeweiligen Verzahnungsanordnung (CT1, CT2, OT1, OT2) angeordneten Freischnittbereichs (AC1, AC2) eine gegenüber der Kontur (PC1, PC2, PO1, PO2) zurückgenommene (PRS) Freischnittkontur (PR1, PR2) aufweist.

2. Zykloidgetriebe (CG) nach Anspruch 1,
**dadurch gekennzeichnet,**
**dass** die Freischnittkontur (PR1, PR2) an Übergängen zu der Kontur (PC1, PC2, PO1, PO2) und/oder an Übergängen zu den Lastflanken-Teilbereichen (AL1, AL2) einen glatten Übergang bildet.

3. Zykloidgetriebe (CG) nach Anspruch 1 oder 2,
**dadurch gekennzeichnet,**
**dass** eine Bogenlänge der Freischnittkontur (PR1, PR2), bezogen auf die Bogenlänge der Kontur (PC1, PC2, PO1, PO2) zwischen 60 % und 85 %, besonders bevorzugt zwischen 65 % und 80 % beträgt.

4. Zykloidgetriebe (CG) nach einem der Ansprüche 1 bis 3,
**dadurch gekennzeichnet,**
**dass** das Zykloidgetriebe (CG) ein Einscheiben- oder Mehrscheiben-Zykloidgetriebe (CG) mit einer oder mehreren Zykloidscheibeneinrichtungen (DC1, DC2) sowie mit zwei Gegenzykloideinrichtungen (OC1, OC2) ist.

5. Zykloidgetriebe (CG) nach einem der Ansprüche 1 bis 3,
**dadurch gekennzeichnet,**
**dass** das Zykloidgetriebe ein Compur-Getriebe (CM) mit zumindest einer Innenzykloidscheibeneinrichtung (DCI), zumindest einer Außenzykloidscheibeneinrichtung (DCO) und einer als Gegenzykloideinrichtung (OC1, OC2) zwischen den Konturen (PC1, PC2) von Innenzykloidscheibeneinrichtung (DCI) und Außenzykloidscheibeneinrichtung (DCO) formschlüssig mit den Konturen (PC1, PC2) exzentrisch umlaufenden Nockenscheibe (DI) ist, wobei zumindest eine von Innenzykloidscheibeneinrichtung (DCI) und Außenzykloidscheibeneinrichtung (DCO) um die Mittelachse (AD) des Zykloidgetriebes rotierbar ist.

6. Zykloidgetriebe (CG) nach einem der Ansprüche 1 bis 3,
**dadurch gekennzeichnet,**
**dass** das Zykloidgetriebe (CG) ein Cyclo-Acbar-Getriebe (CA) mit zumindest zwei rotatorisch starr miteinander verbundenen Zykloidscheibeneinrichtungen (DC1, DC2) und zwei Gegenzykloideinrichtungen (OC1, OC2) ist, wobei zumindest eine der Gegenzykloideinrichtungen (OC1, OC2) um die Mittelachse (AD) des Zykloidgetriebes (CG) rotierbar ist.

7. Zykloidgetriebe (CG) nach einem der Ansprüche 4 bis 6,
**dadurch gekennzeichnet,**
**dass** eine der Gegenzykloideinrichtungen (OC1, OC2) einen mit einer ersten Zykloidscheibeneinrichtung (DC1, DC2) im Eingriff stehenden rotatorischen Abtrieb oder Antrieb des Zykloidgetriebes (CG) bildet, und die zweite Gegenzykloideinrichtung (OC2, OC1) eine mit der zweiten Zykloidscheibeneinrichtung (DC2, DC1) in Eingriff stehende, vorzugsweise mit einem Gehäuse (TH) des Zykloidgetriebes (CG) verbundene (HDT) Drehmoment-Gegenstütze bildet.

8. Zykloidgetriebe (CG) nach einem der Ansprüche 1 bis 7,
**dadurch gekennzeichnet,**
**dass** Kontaktbereiche (CD1, CD2) zumindest einer der Gegenverzahnungsanordnungen (OT1, OT2) zur Erhöhung der Elastizität bei der Drehmomentübertragung zwischen Zykloidscheibeneinrichtung (DC1, DC2) und Gegenzykloideinrichtung (OC1, OC2) Polymerwerkstoff umfassen.

9. **Elektrische Fahrrad-Antriebseinheit** (DU) zur Anordnung in einem Tretlagerbereich eines Fahrradrahmens, die Antriebseinheit (DU) umfassend
- eine Tretlagerwelle (SB) zur Montage von Pedalkurbeln,
- eine elektrische Motoreinrichtung (MD) mit einer Statoreinrichtung (SD) und einer auf einer Rotorwelle (SR) angeordneten Rotoreinrichtung (AR), wobei die Rotorwelle (SR) koaxial zur Tretlagerwelle angeordnet ist,
- eine Freilaufanordnung mit zumindest einer Freilaufeinrichtung (FA),
- eine Sensoranordnung mit zumindest einer Sensoreinrichtung (SSP, STM, TS),
- zumindest eine Elektronikeinrichtung (AP1, AP2) zur Ansteuerung der Motoreinrichtung (MD) und/oder zur Verarbeitung von Signalen der Sensoreinrichtung (SSP, STM, TS),
- eine Abtriebswelle (SO) zur Übertragung von Antriebsleistung an einen Fahrrad-Antriebsstrang (TP), und
- eine Getriebeeinrichtung (CG) mit einem Zykloidgetriebe (CG) nach einem der Ansprüche 1 bis 7 oder nach dem Oberbegriff von Anspruch 1,
**dadurch gekennzeichnet,**
**dass** das Zykloidgetriebe (CG) gegenüber der Motoreinrichtung (MD) zumindest flüssigkeitsdicht gekapselt ist.

10. Antriebseinheit (DU) nach Anspruch 9,
**dadurch gekennzeichnet,**
**dass** das Zykloidgetriebe (CG) gegenüber mehreren oder allen von Motoreinrichtung (MD), Freilaufanordnung, Sensoranordnung und Elektronikeinrichtung (AP1, AP2) zumindest flüssigkeitsdicht gekapselt ist.

11. Antriebseinheit (DU) nach Anspruch 9 oder 10 oder nach dem Oberbegriff von Anspruch 9,
**dadurch gekennzeichnet,**
**dass** die Rotorwelle (SR) ausschließlich in dem Zykloidgetriebe (CG) gelagert ist, wobei die Rotoreinrichtung (AR) im Bereich eines fliegenden Endes der Rotorwelle (SR) auf der Rotorwelle (SR) angeordnet ist.

12. Antriebseinheit (DU) nach Anspruch 11,
**dadurch gekennzeichnet,**
**dass** das getriebeseitige Ende der Rotorwelle (SR) im Inneren einer Getriebeabtriebswelle (SO) gelagert ist.

13. Antriebseinheit (DU) nach einem der Ansprüche 9 bis 12 oder nach dem Oberbegriff von Anspruch 9,
**gekennzeichnet durch**
eine Axialfreilaufeinrichtung (FA) mit Koppelelementen (DR, CL, DO) zur Entkopplung der Abtriebswelle (SO) von der Getriebeeinrichtung (CG), wobei die Axialfreilaufeinrichtung (FA) im Wesentlichen scheibenförmig ausgebildet und zur Durchleitung eines Getriebedrehmoments (TM2) **durch** die Koppelelemente (DR, CL, DO) in Axialrichtung eingerichtet ist, bezogen auf die Tretlagerwelle (SB).

14. Antriebseinheit (DU) nach Anspruch 13,
**dadurch gekennzeichnet,**
**dass** zumindest eines der Koppelelemente (DR, CL, DO) der Axialfreilaufeinrichtung (FA) im wesentlichen aus einem Polymerwerkstoff besteht.

15. Antriebseinheit (DU) nach Anspruch 13 oder 14,
**dadurch gekennzeichnet,**
**dass** die Axialfreilaufeinrichtung (FA) eine Steuereinrichtung (RDD, RDC, DMN, FPP) zur drehrichtungsabhängig aktiven Bewegung zumindest eines der Koppelelemente (DR, CL, DO) umfasst.

16. Antriebseinheit (DU) nach einem der Ansprüche 9 bis 15 oder nach dem Oberbegriff von Anspruch 9,
**gekennzeichnet durch**
eine Drehzahlsensoreinrichtung (TMS) mit einem Drehzahlsensorelement (STM) und ein mit der Tretlagerwelle (SB) verbundenes Tachoelement (TE) zur berührungslosen Messung der Drehzahl der Tretlagerwelle (SB), wobei das Tachoelement (TE) und das Drehzahlsensorelement (STM) auf gegenüberliegenden Seiten einer von einem Getriebedrehmoment (TM2) der Antriebseinheit (DU) durchströmbaren Wandung (DA) eines Abtriebswellenabschnitts angeordnet sind.

17. Antriebseinheit (DU) nach einem der Ansprüche 13 bis 15 und nach Anspruch 16,
**dadurch gekennzeichnet,**
**dass** das Tachoelement (TE) in einem Innenbereich der Axialfreilaufeinrichtung (FA) angeordnet ist.

18. Antriebseinheit (DU) nach einem der Ansprüche 9 bis 17 oder nach dem Oberbegriff von Anspruch 9,
**dadurch gekennzeichnet,**
**dass** eine der Elektronikeinrichtungen (AP1, AP2) zumindest zwei der drei Sensoreinrichtungen 1. Drehzahlsensoreinrichtung (TMS) mit einem Drehzahlsensorelement (STM) zur Messung der Drehzahl der Tretlagerwelle (SB), 2. Drehmomentsensoreinrichtung mit einem Drehmomentsensorelement (CC, TS) zur Messung einer elastischen Deformation eines Deformationselements (ED) eines Abtriebswellenabschnitts, und 3. Geschwindigkeitssensoreinrichtung mit einem Geschwindigkeitssensorelement (SSP) zur Messung einer Drehzahl eines Fahrrad-Laufrads (WB) umfasst.

19. Antriebseinheit (DU) nach Anspruch 18,
**dadurch gekennzeichnet,**
**dass** die Elektronikeinrichtung (AP1, AP2) eine kreisringförmige oder kreisringsegmentförmige Platineneinrichtung umfasst, auf der im Wesentlichen sämtliche Elektronik-Baugruppen und Elektronik-Bauteile der zumindest zwei Sensoreinrichtungen angeordnet sind.

20. **Axialfreilaufeinrichtung** (FA) für eine Antriebseinheit (DU) nach einem der Ansprüche 9 bis 19,
**gekennzeichnet durch**
die Axialfreilaufeinrichtung (FA) betreffende Merkmale eines der Ansprüche 9 bis 19.

21. **Drehzahlsensoreinrichtung** (TMS) für eine Antriebseinheit (DU) nach einem der Ansprüche 9 bis 19,
**gekennzeichnet durch**
die Drehzahlsensoreinrichtung (TMS) betreffende Merkmale eines der Ansprüche 9 bis 19.
